# EUROPÄISCHE PATENTSCHRIFT

(11) **EP 0 346 971 B1**
(45) Veröffentlichungstag und Bekanntmachung des Hinweises auf die Patenterteilung: **11.05.1994**
(21) Anmeldenummer: 89201463.0
(22) Anmeldetag: 08.06.1989
(51) Int. Cl.: G11B 15/18, G11B 15/32

(54) **Aufzeichnungs- und/oder Wiedergabegerät für einen bandförmigen Aufzeichnungsträger**
Recording and/or reproduction apparatus for a tape-like recording medium
Appareil d'enregistrement et/ou de reproduction pour un support d'enregistrement sous forme de bande

(30) Priorität: 14.06.1988 AT 1544/88
(43) Veröffentlichungstag der Anmeldung: 20.12.1989
(73) Patentinhaber: Philips Electronics N.V., 5621 BA Eindhoven (NL)
(72) Erfinder: Bayer, Ernst, NL-5656 AA Eindhoven (NL); Fischer, Karl, NL-5656 AA Eindhoven (NL)
(74) Vertreter: Cuppens, Hubertus Martinus Maria

(56) Entgegenhaltungen:
- EP-A- 0 094 243
- DE-A- 3 311 944
- PATENT ABSTRACTS OF JAPAN, unexamined applications, Field P, Vol. 6, Nr. 27, 17. Februar 1982 THE PATENT OFFICE JAPANESE GOVERNMENT Seite 47 P 102

## Beschreibung

Die Erfindung bezieht sich auf ein Aufzeichungs- und/oder Wiedergabegerät für einen bandförmigen Aufzeichnungsträger, der in einer in das Gerät einsetzbaren Kassette mit zwei nebeneinanderliegenden, rotierend antreibbaren Wickelkernen zum Aufwickeln des Aufzeichnungsträgers untergebracht ist, mit einem rotierend antreibbaren Vorlauf-Wickeldorn und einem rotierend antreibbaren Rücklauf-Wickeldorn, von denen jeder mit einem der beiden Wickelkerne zum Antreiben des Aufzeichnungsträgers bei in das Gerät eingesetzter Kassette in Antriebsverbindung steht und mit einem von zwei je zu einem der beiden Wickeldorne koaxial angeordneten Wickeldornrädern drehfest verbunden ist, die beide an eine den Wickeldornrädern zugewandte Kassettenhauptseite angrenzend im wesentlichen auf demselben axialen Niveau angeordnet sind, und mit einer zum Antreiben der beiden Wickeldornräder vorgesehenen Antriebseinrichtung, die auf einem quer zu den Achsen der Wickeldorne verstellbaren Lagerbock eine zu den Achsen der Wickeldorne parallele, drehbar gelagerte Antriebswelle aufweist, auf der ein von einem Motor her rotierend antreibbares Treibrad angebracht ist und die einen ersten Wellenabschnitt und einen zweiten Wellenabschnitt aufweist, von denen der erste Wellenabschnitt im wesentlichen auf dem Niveau der Wickeldornräder und der zweite Wellenabschnitt auf einem zwischen dem Niveau der Wickeldornräder und dem Niveau der von den Wickeldornrädern abgewandten Kassettenhauptseite liegenden Niveau liegt und von denen her durch Verstellen des Lagerbockes wahlweise eines von den beiden Wickeldornrädern antreibbar ist, wobei zwischen dem zweiten Wellenabschnitt und dem von diesem her antreibbaren Wickeldornrad eine den Niveauunterschied zwischen ihren Niveaus ausgleichende Antriebsverbindung vorgesehen ist.

Bei einem unter der Typbezeichnung LFH 0660 im Handel erhältlichen bekannten Gerät dieser Gattung handelt es sich um ein vom Benützer beim Betrieb in einer Hand gehaltenes Taschendiktiergerät für eine ein Magnetband als Aufzeichnungsträger enthaltende Kassette. Bei solchen Geräten gehen Bestrebungen dahin, die Abmessungen derselben möglichst klein zu halten, wobei insbesondere die Bauhöhe, also die Dicke, und auch die Breite solcher Geräte möglichst gering sein sollen, um dieselben leicht und bequem in Taschen von Sakkos und dergleichen unterbringen zu können. Bei diesem bekannten Gerät ist eine Kassette mit ihrer Längserstreckung quer zur Längserstreckung des Gerätes in dasselbe einsetzbar und ist der verstellbare Lagerbock samt der darauf drehbar gelagerten, parallel zu den Achsen der Wickeldorne verlaufenden Antriebswelle im Bereich der von den Magnetköpfen zum Abtasten des Magnetbandes abgewandten langen Kassettenschmalseite angeordnet. Dabei liegt das auf der Antriebswelle angebrachte Treibrad auf einem axialen Niveau, das in Richtung von der den Wickeldornrädern zugewandten Kassettenhauptseite zu den Wickeldornrädern einen größeren Abstand vom Niveau dieser Kassettenhauptseite als das Niveau der Wickeldornräder aufweist. Mit anderen Worten ausgedrückt bedeutet dies, daß bei Draufsicht auf das Gerät das Treibrad in Bezug auf die Kassette und die Wickeldornräder unterhalb der Wickeldornräder angeordnet ist. Aufgrund dieser Anordnung des Treibrades ist für dasselbe in axialer Richtung der Wickeldorne des Gerätes unterhalb der Wickeldornräder ein Raumbedarf innerhalb des Gerätes erforderlich, der der Bestrebung entgegensteht, die Geräteabmessung in axialer Richtung der Wickeldorne möglichst klein zu halten, also ein möglichst flaches Gerät realisieren zu können.

Die Erfindung hat sich zur Aufgabe gestellt, die vorgenannte Bestrebung erfüllen zu können und ein Gerät der eingangs angeführten Gattung so auszubilden, daß eine möglichst kleine Geräteabmessung in axialer Richtung der Wickeldorne erreichbar ist. Dies wird erfindungsgemäß dadurch erreicht, daß das auf der Antriebswelle angebrachte Treibrad neben dem für die Kassette vorgesehenen Raum auf einem zwischen dem Niveau der Wickeldornräder und dem Niveau der von den Wickeldornrädern abgewandten Kassettenhauptseite liegenden Niveau angeordnet ist. Auf diese Weise ist erreicht, daß das Treibrad sich in einem Niveaubereich neben der Kassette, der sonst ungenützt wäre, befindet und daher für dasselbe unterhalb der Kassette und der Wickeldornräder kein Raumbedarf erforderlich ist, so daß die Geräteabmessung in axialer Richtung der Wickeldorne nur durch die Dicke der Kassette und die Bauhöhe der an die Kassette angrenzenden Wickeldornräder bestimmt sein kann und daher einen minimalen Wert aufweisen kann. Hiedurch ist die Voraussetzung geschaffen, möglichst flache Geräte mit einer minimalen Bauhöhe realisieren zu können.

Das Treibrad kann beispielsweise auf der Antriebswelle zwischen dem ersten und dem zweiten Wellenabschnitt angeordnet sein. Als vorteilhaft hat sich aber erwiesen, wenn das Niveau des auf der Antriebswelle angebrachten Treibrades in axialer Richtung der Antriebswelle einen größeren Abstand von dem Niveau der Wickeldornräder aufweist als das Niveau des zweiten Wellenabschnittes der Antriebswelle. Auf diese Weise ist erreicht, daß das Treibrad möglichst nahe bei dem Niveau der von den Wickeldornrädern abgewandten Kassettenhauptseite angeordnet werden kann, was im Hinblick auf eine möglichst freie Wahl der Bauhöhe des zum Antreiben des Treibrades vorgesehenen Motors vorteilhaft ist.

Das Treibrad kann beispielsweise im Bereich einer der beiden langen Kassettenschmalseiten neben der Kassette angeordnet sein. Als besonders vorteilhaft hat sich aber erwiesen, wenn das Treibrad im Bereich einer der beiden kurzen Kassettenschmalseiten neben der Kassette liegt. Auf diese Weise ist erreicht, daß bei einem Gerät, in das eine Kassette mit ihrer Längserstreckung parallel zur Längserstreckung des Gerätes einsetzbar ist, auch quer zur Längserstreckung des Gerätes eine möglichst kleine Geräteabmessung erreichbar ist, so daß vorteilhafterweise Geräte mit einer möglichst geringen Breite realisierbar sind.

Dabei hat sich weiters als besonders vorteilhaft erwiesen, wenn das Treibrad im Bereich der näher bei dem Vorlauf-Wickeldorn befindlichen kurzen Kassettenschmalseite neben der Kassette liegt. Auf diese Weise ist erreicht, daß zwischen jenem Wellenabschnitt der Antriebswelle, von dem her das mit dem Vorlauf-Wickeldorn drehfest verbundene Wickeldornrad antreibbar ist, und diesem Wickeldornrad mit einer möglichst wenige Teile aufweisenden Antriebsverbindung das Auslangen gefunden wird, was im Hinblick auf kleine Geräteabmessungen und einen gleichmäßigen und einwandfreien Antrieb des Vorlauf-Wickeldornes vorteilhaft ist.

In diesem Zusammenhang hat sich im Hinblick auf die Kraftübertragung von der Antriebswelle zu dem Vorlauf-Wickeldorn bei einem Gerät, bei dem das mit dem Vorlauf-Wickeldorn drehfest verbundene Wickeldornrad als Reibrad ausgebildet und von dem ersten Wellenabschnitt der Antriebswelle her antreibbar ist, als vorteilhaft erwiesen, wenn das mit dem Vorlauf-Wickeldorn drehfest verbundene Reibrad über ein weiteres Reibrad antreibbar ist, mit dem durch Verstellen des Lagerbockes der erste Wellenabschnitt der Antriebswelle in Antriebsverbindung bringbar ist. Auf diese Weise ist zwischen dem ersten Wellenabschnitt der Antriebswelle und dem mit dem Vorlauf-Wickeldorn drehfest verbundenen Reibrad eine besonders einfache, robuste und betriebssichere Antriebsverbindung erhalten, die in einer Vorlauf-Betriebsart für den Aufzeichnungsträger zum Aufzeichnen und Wiedergeben von Signalen ein praktisch wobbelfreies Antreiben des Vorlauf-Wickeldornes und folglich des Aufzeichnungsträgers gewährleistet.

Dabei hat sich weiters als vorteilhaft erwiesen, wenn im Bereich des Lagerbockes eine zum Verstellen desselben vorgesehene Verstellfeder angeordnet ist, mit der der Lagerbock zum Verstellen desselben in Richtung zu dem weiteren Reibrad hin belastbar ist und mit der über den Lagerbock der erste Wellenabschnitt der Antriebswelle mit dem weiteren Reibrad in Antriebsverbindung bringbar ist. Hiedurch ist erreicht, daß in der Vorlauf-Betriebsart die Verstellfeder den ersten Wellenabschnitt gegen das weitere Reibrad drückt, wodurch ein durch die Federkraft festgelegter, genau definierter Anpreßdruck zwischen dem ersten Wellenabschnitt und dem weiteren Reibrad sowie dem weiteren Reibrad und dem mit dem Vorlauf-Wickeldorn drehfest verbundenen Reibrad erreicht ist, was im Hinblick auf eine ausreichend hohe Reibwirkung und zugleich eine lange Lebensdauer der Reibradverbindung vorteilhaft ist.

Im Hinblick auf die Kraftübertragung von der Antriebswelle zu dem Rücklauf-Wickeldorn hat sich bei einem Gerät, bei dem das Treibrad im Bereich der näher bei dem Vorlauf-Wickeldorn befindlichen kurzen Kassettenschmalseite neben der Kassette liegt und bei dem das mit dem Rücklauf-Wickeldorn drehfest verbundene Wickeldornrad als Zahnrad ausgebildet und auf dem zweiten Wellenabschnitt der Antriebswelle ein Stirnzahnrad angebracht ist, das durch Verstellen des Lagerbockes mit einem Zahnradgetriebe in Eingriff bringbar ist, über welches das mit dem Rücklauf-Wickeldorn drehfest verbundene Zahnrad antreibbar ist, wobei in dem Zahnradgetriebe die den Niveauunterschied zwischen dem Niveau des zweiten Wellenabschnittes und dem Niveau der Wickeldornräder ausgleichende Antriebsverbindung vorgesehen ist, als vorteilhaft erwiesen, wenn mit dem auf dem zweiten Wellenabschnitt angebrachten Stirnzahnrad über einen ersten Getriebeabschnitt des Zahnradgetriebes, mit dem durch Verstellen des Lagerbockes das Stirnzahnrad in Eingriff bringbar ist und der die Antriebsverbindung zum Ausgleichen des Niveauunterschiedes zwischen dem Niveau des Stirnzahnrades und dem Niveau der Wickeldornräder bildet, eine im wesentlichen auf dem Niveau der Wickeldornräder verlaufende, einen flexiblen Bereich aufweisende Wellenverbindung antreibbar ist, die über einen im wesentlichen auf dem Niveau der Wickeldornräder liegenden zweiten Getriebeabschnitt des Zahnradgetriebes das mit dem Rücklauf-Wickeldorn drehfest verbundene Zahnrad antreibt. Auf diese Weise ist zwischen dem zweiten Wellenabschnitt der Antriebswelle und dem mit dem Rücklauf-Wickeldorn drehfest verbundenen Zahnrad eine Antriebsverbindung erhalten, die einen guten Wirkungsgrad aufweist, was im Hinblick auf einen einwandfreien, energiesparenden Antrieb des Rücklauf-Wickeldornes und folglich des Aufzeichnungsträgers beim Rückspulen desselben in einer Rücklauf-Betriebsart vorteilhaft ist, und die auch mit einem geringen Raumbedarf das Auslangen findet, was im Hinblick auf die Bestrebung, die Geräteabmessungen möglichst klein zu halten, vorteilhaft ist.

Hinsichtlich der Ausbildung der Wellenverbindung hat sich als vorteilhaft erwiesen, wenn der flexible Bereich der Wellenverbindung durch eine Schraubenfeder gebildet ist, die mit ihrem einen Ende auf eine von dem ersten Getriebeabschnitt angetriebene erste Welle und mit ihrem anderen Ende auf eine den zweiten Getriebeabschnitt antreibende zweite Welle aufgesetzt ist. Auf diese Weise ist eine besonders einfache und billige Ausbildung für die Wellenverbindung erreicht, die mit einer standardmäßigen Schraubenfeder gebildet ist.

Der erste Getriebeabschnitt kann beispielsweise mit Hilfe von Kegelzahnrädern aufgebaut sein. Als besonders vorteilhaft hat sich aber erwiesen, wenn der erste Getriebeabschnitt durch ein weiteres Stirnzahnrad, mit dem durch Verstellen des Lagerbockes das auf dem zweiten Wellenabschnitt angebrachte Stirnzahnrad in Eingriff bringbar ist, ein mit dem weiteren Stirnzahnrad koaxial verbundenes Kronenzahnrad, dessen Zähne in Richtung zu dem Niveau der Wickeldornräder weisen, und ein mit dem Kronenzahnrad in Eingriff stehendes Stirnzahnritzel gebildet ist, das mit der ersten Welle der Wellenverbindung verbunden ist. Eine solche Ausbildung des ersten Getriebeabschnittes ist aufgrund ihrer Einfachheit und billigen Herstellbarkeit vorteilhaft.

Hinsichtlich des zweiten Getriebeabschnittes hat sich als vorteilhaft erwiesen, wenn das mit dem Rücklauf-Wickeldorn drehfest verbundene Zahnrad als Schneckenrad ausgebildet ist und der zweite Getriebeabschnitt durch eine mit der zweiten Welle der Wellenverbindung verbundene Schnecke gebildet ist, die mit der zweiten Welle auf einem quer zu den Achsen der Wickeldorne verstellbaren Träger drehbar gelagert ist und die durch Verstellen des Trägers mit dem Schneckenrad in Eingriff bringbar ist. Auf diese Weise ist zwischen der zweiten Welle und dem mit dem Rücklauf-Wickeldorn drehfest verbundenen Zahnrad, deren Achsrichtungen sich rechtwinkelig kreuzen, eine besonders einfache Antriebsverbindung erhalten, die mit einer minimalen Anzahl von Getriebeteilen gebildet ist.

Hinsichtlich der Verstellung des Trägers hat sich als vorteilhaft erwiesen, wenn im Bereich des Trägers eine zum Verstellen desselben vorgesehene weitere Verstellfeder angeordnet ist, die den Träger zum Verstellen desselben in Richtung zu einem stationären Anschlag für denselben hin belastet und mit der über den Träger die Schnecke von dem mit dem Rücklauf-Wickeldorn drehfest verbundenen Schneckenrad außer Eingriff bringbar ist. Hiedurch ist erreicht, daß die weitere Verstellfeder bestrebt ist, die Schnecke außer Eingriff von dem Schneckenrad zu bringen, so daß ein ungewolltes Ineingriffbleiben der Schnecke mit dem Schneckenrad vorteilhafterweise verhindert ist.

Hinsichtlich der Steuerung der Vorlauf-Betriebsart und der Rücklauf-Betriebsart für den Aufzeichnungsträger hat sich als vorteilhaft erwiesen, wenn zur Steuerung der Verstellung des Trägers für die zweite Welle samt der Schnecke und der Verstellung des Lagerbockes für die Antriebswelle samt dem Treibrad ein einziger von Hand aus zumindest zwischen einer Vorlauf-Betriebsstellung und einer Rücklauf-Betriebsstellung verschiebbarer Steuerschieber vorgesehen ist. Auf diese Weise ist erreicht, daß sowohl die Verstellung des Lagerbockes als auch die Verstellung des Trägers nur von dem einen Steuerschieber her erfolgt, was im Hinblick auf eine einfache Ausbildung und genau abgestimmte Bewegungsabläufe vorteilhaft ist.

Als vorteilhaft hat sich dabei erwiesen, wenn die weitere Verstellfeder als Schenkelfeder ausgebildet ist, die mit ihrem einen Schenkel an dem Träger und mit ihrem anderen Schenkel an einem quer zur Verstellrichtung des Steuerschiebers verstellbar geführten Rastteil abgestützt ist, der zumindest in einer der Betriebsstellungen des Steuerschiebers mit der weiteren Verstellfeder in eine an dem Steuerschieber vorgesehene, dieser Betriebsstellung zugeordnete Rastvertiefung hineingedrückt ist. Auf diese Weise ist erreicht, daß die weitere Verstellfeder für den Träger vorteilhafterweise eine zusätzliche Funktion erfüllt, und zwar als Rastfeder zur Verrastung des Steuerschiebers in mindestens einer seiner Betriebsstellungen.

Der Steuerschieber kann zur Steuerung der Verstellung des Lagerbockes und des Trägers beispielsweise unmittelbar mit denselben zusammenwirken. Als vorteilhaft hat sich aber erwiesen, wenn der Steuerschieber in seiner Rücklauf-Betriebsstellung über einen ersten Mitnehmer desselben die Verstellfeder, mit der der Lagerbock belastbar ist, zum Aufheben der Belastung des Lagerbockes und über einen zweiten Mitnehmer desselben die weitere Verstellfeder, die den Träger belastet, zum Ineingriffhalten der Schnecke mit dem Schneckenrad verstellt hält und in seiner Vorlauf-Betriebsstellung mit seinem ersten Mitnehmer und seinem zweiten Mitnehmer von den beiden Verstellfedern freigestellt ist. Auf diese Weise ist erreicht, daß der Steuerschieber in seiner Vorlauf-Betriebsstellung überhaupt nicht und in seiner Rücklauf-Betriebsstellung nicht unmittelbar, sondern mit seinen beiden Mitnehmern über die beiden Verstellfedern mit dem Lagerbock und dem Träger zusammenwirkt, was im Hinblick auf eine von Toleranzen praktisch unabhängige Steuerung der Verstellung des Lagerbockes und des Trägers mit Hilfe des Steuerschiebers vorteilhaft ist.

Der Steuerschieber kann in seiner Rücklauf-Betriebsstellung den Lagerbock beispielsweise über eine weitere Feder so verstellt halten, daß das auf dem zweiten Wellenabschnitt der Antriebswelle angebrachte Stirnzahnrad mit dem Zahnradgetriebe zum Antreiben des mit dem Rücklauf-Wickeldorn drehfest verbundenen Zahnrades in Eingriff gehalten ist. Es hat sich aber bei einem Gerät, bei dem das auf der Antriebswelle angebrachte Treibrad als Pesenrad ausgebildet ist und auf der Motorwelle des Motors ein weiteres Pesenrad angebracht ist, das über eine Pese das Pesenrad antreibt, als besonders vorteilhaft erwiesen, wenn die Pese über das Pesenrad auf den verstellbaren Lagerbock eine Kraft ausübt, die den Lagerbock zum Ineingriffbringen des auf dem zweiten Wellenabschnitt der Antriebswelle angebrachten Stirnzahnrades mit dem Zahnradgetriebe zum Antreiben des mit dem Rücklauf-Wickeldorn drehfest verbundenen Zahnrades belastet. Auf diese Weise ist erreicht, daß die Verstellung des Lagerbockes zum Ineingriffbringen des auf dem zweiten Wellenabschnitt der Antriebswelle angebrachten Stirnzahnrades mit dem Zahnradgetriebe zum Antreiben des mit dem Rücklauf-Wickeldorn drehfest verbundenen Zahnrades vorteilhafterweise ohne separate Mittel mit der ohnehin vorhandenen Pese erfolgt.

In diesem Zusammenhang hat sich ferner als vorteilhaft erwiesen, wenn der Lagerbock zu seiner Verstellung auf einem verschwenkbaren Verstellhebel angebracht ist und bei der Verstellung des Lagerbockes zum Ineingriffbringen des auf dem zweiten Wellenabschnitt der Antriebswelle angebrachten Stirnzahnrades mit dem Zahnradgetriebe zum Antreiben des mit dem Rücklauf-Wickeldorn drehfest verbundenen Zahnrades das Pesenrad von dem weiteren Pesenrad weg verstellt wird, wobei die Pese zwischen dem weiteren Pesenrad und dem Pesenrad zusätzlich gespannt wird. Hiedurch wird in der Rücklauf-Betriebsart für den Aufzeichnungsträger eine höhere Pesenspannung und folglich eine höhere Friktion als in der Vorlauf-Betriebsart erreicht, was im Hinblick auf einen sicheren Antrieb des Aufzeichnungsträgers in der Rücklauf-Betriebsart und auch einen energiesparenden Antrieb des Aufzeichnungsträgers in der Vorlauf-Betriebsart vorteilhaft ist.

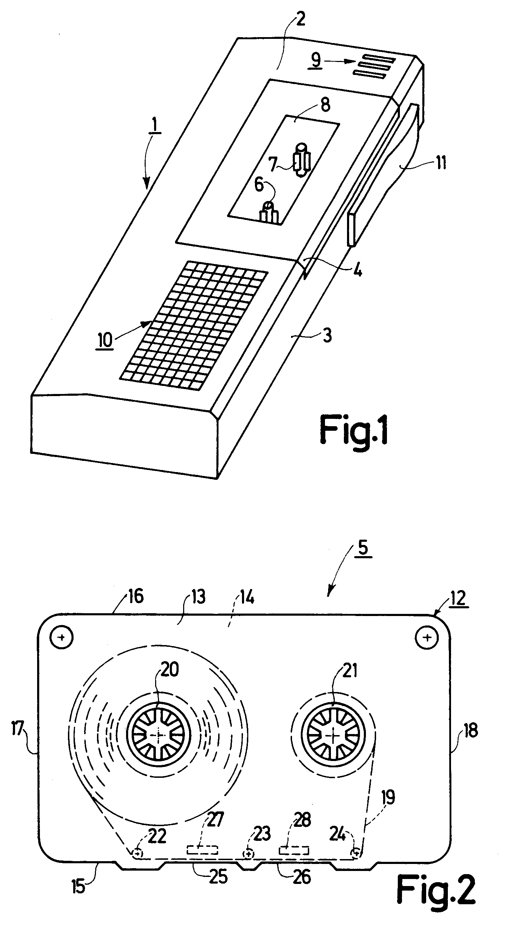

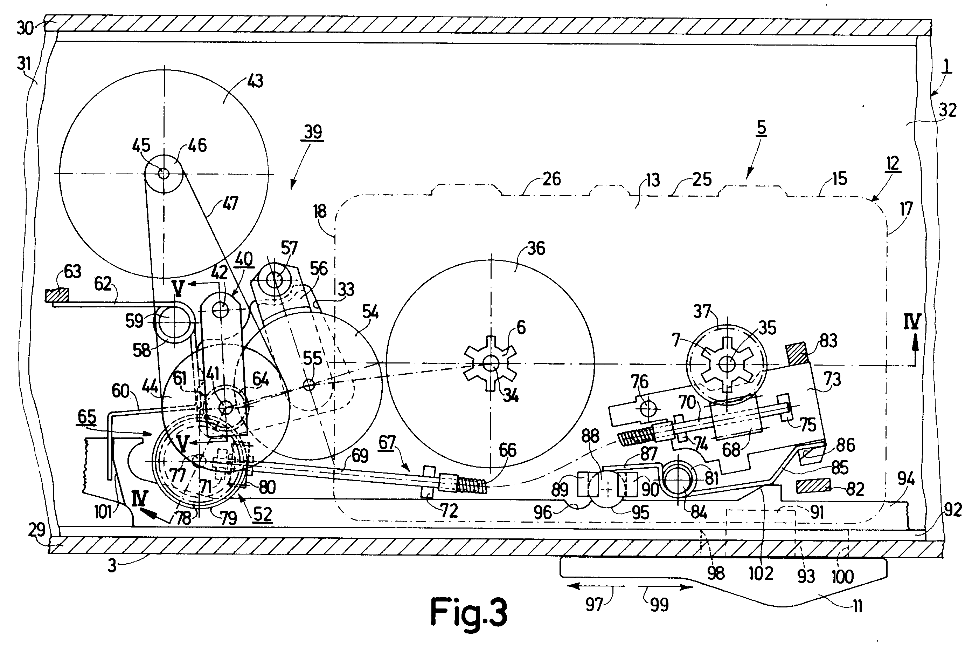

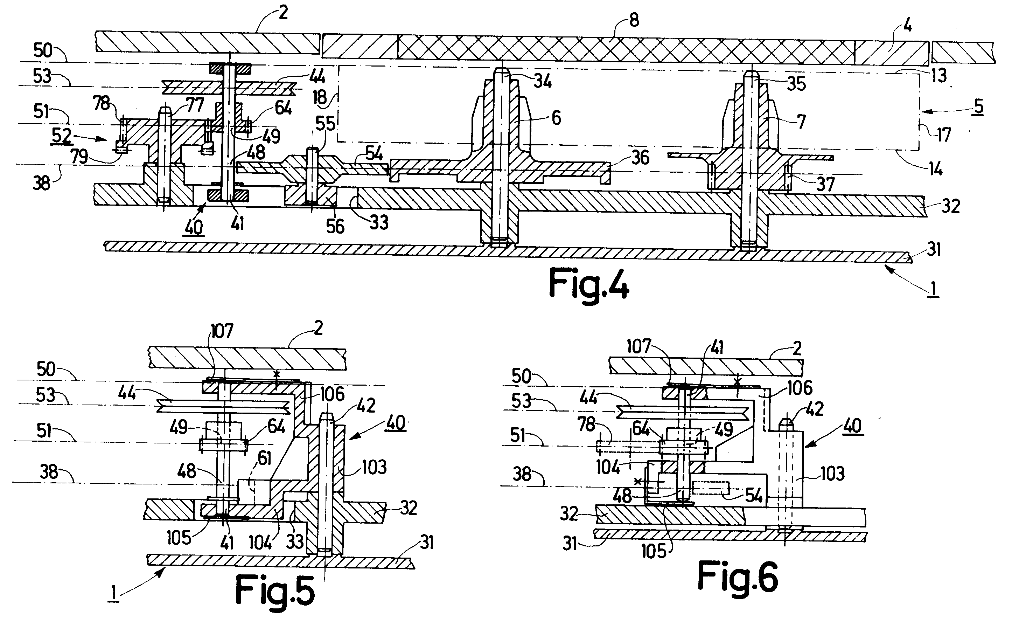

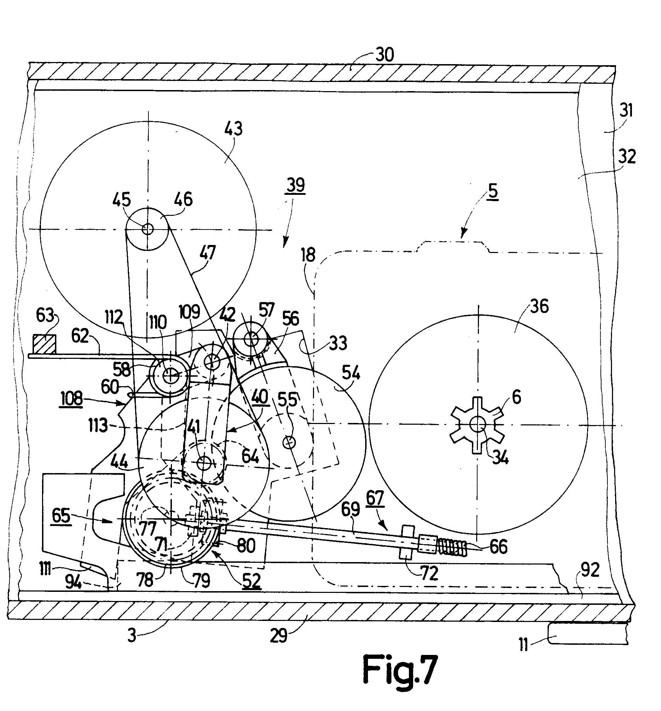

Die Erfindung wird im folgenden anhand von drei in den Zeichnungen dargestellten Ausführungsbeispielen, auf die sie jedoch nicht beschränkt sein soll, näher beschrieben. Die Fig.1 zeigt etwa in natürlicher Größe in Schrägansicht ein als Taschendiktiergerät ausgebildetes Aufzeichnungs- und Wiedergabegerät gemäß einem ersten Ausführungsbeispiel der Erfindung, in das eine ein Magnetband als Aufzeichnungsträger enthaltende Kassette einsetzbar ist. Die Fig.2 zeigt teilweise schematisiert in einem gegenüber der natürlichen Größe größeren Maßstab in Draufsicht eine in das Gerät gemäß Fig.1 einsetzbare Kassette. Die Fig.3 zeigt in etwas vereinfachter Weise in einem gegenüber den Figuren 1 und 2 größeren Maßstab in Draufsicht einen Teil des Gerätes gemäß Fig.1 bei weggeschnittenem Geräteoberteil, wobei der dargestellte Teil des Gerätes eine Antriebseinrichtung für zwei Wickeldorne des Gerätes enthält und wobei die Kassette nur mit einer strichpunktierten Linie angedeutet ist. Die Fig.4 zeigt einen Teil der in Fig.3 dargestellten Antriebseinrichtung für die beiden Wickeldorne des Gerätes gemäß Fig.1 in einem Schnitt längs der Linie IV-IV in Fig.3 durch ein auf einem Lagerbock mittels einer Antriebswelle drehbar gelagertes Treibrad der Antriebseinrichtung und durch die beiden Wickeldorne, wobei die Kassette nur mit einer strichpunktierten Linie angedeutet ist. Die Fig.5 zeigt in einem Schnitt längs der Linie V-V in Fig.3 den Lagerbock samt dem mit der Antriebswelle darauf drehbar gelagerten Treibrad des Gerätes gemäß Fig.1. Die Fig.6 zeigt in analoger Weise wie die Fig.5 einen Lagerbock zum drehbaren Lagern eines Treibrades einer Antriebseinrichtung für die Wickeldorne eines Gerätes gemäß einem zweiten Ausführungsbeispiel der Erfindung. Die Fig.7 zeigt in analoger Weise wie die Fig.3 einen auf einem verstellbaren Hebel angebrachten Lagerbock zum drehbaren Lagern eines Treibrades einer Antriebseinrichtung für die Wickeldorne eines Gerätes gemäß einem dritten Ausführungsbeispiel der Erfindung.

Die Fig.1 zeigt ein als Taschendiktiergerät ausgebildetes Aufzeichnungs- und Wiedergabegerät 1 zum Aufzeichnen und Wiedergeben von Sprachsignalen. Das Gerät 1 weist einen an der Geräteoberseite 2 verschwenkbar gelagerten, bis in eine in Fig.1 sichtbare lange Geräteschmalseite 3 reichenden Verschlußdeckel 4 zum Verschließen eines Kassettenaufnahmeraumes auf, in den eine ein Magnetband als Aufzeichnungsträger enthaltende Kassette 5, wie sie in Fig.2 dargestellt ist, mit ihrer Längserstreckung parallel zur Längserstreckung des Gerätes 1 einsetzbar ist. In Fig.1 ist eine Situation dargestellt, in der sich keine Kassette in dem Kassettenaufnahmeraum befindet. In den Kassettenaufnahmeraum ragen von der Geräteunterseite her ein Vorlauf-Wickeldorn 6 und ein Rücklauf-Wickeldorn 7, die durch einen durchsichtigen Fensterteil 8 des Verschlußdeckels 4 hindurch sichtbar sind. An der Geräteoberseite 2 sind weiters eine Reihe 9 von Schalldurchtrittsschlitzen, hinter denen sich ein in das Gerät 1 eingebautes Mikrofon befindet, und ein schematisch dargestelltes Feld 10 von Schalldurchtrittslöchern vorgesehen, hinter denen sich ein in das Gerät 1 eingebauter Lautsprecher befindet. An der in Fig.1 sichtbaren langen Geräteschmalseite 3 weist das Gerät 1 einen in Längsrichtung dieser Geräteschmalseite verschiebbaren Schiebeknopf 11 zum Einschalten von Bandlauf-Betriebsarten des Gerätes auf. Der Schiebeknopf 11 ist von Hand aus zwischen vier Betriebsstellungen hin und her verschiebbar, wobei diese vier Betriebsstellungen aufeinanderfolgend den Bandlauf-Betriebsarten "Schneller Rücklauf", "Stop", "Normaler Vorlauf" und "Schneller Vorlauf" entsprechen.

Die Kassette 5 weist ein quaderförmiges Gehäuse 12 auf, das eine in Fig.2 sichtbare erste Kassettenhauptseite 13, eine in Fig.2 nicht sichtbare zweite Kassettenhauptseite 14, eine vordere lange Kassettenschmalseite 15, eine hintere lange Kassettenschmalseite 16, eine gemäß Fig.2 linke kurze Kassettenschmalseite 17 und eine gemäß Fig.2 rechte kurze Kassettenschmalseite 18 aufweist. In der Kassette 5 ist als Aufzeichnungsträger zum Speichern von Sprachsignalen ein Magnetband 19 untergebracht, wobei zum Aufwickeln des Magnetbandes 19 zwei nebeneinanderliegende, rotierend antreibbare Wickelkerne 20 und 21 zwischen den beiden Kassettenhauptseiten 13 und 14 drehbar gelagert sind. Das Magnetband 19 ist mit seinen Enden an den Wickelkernen 20 und 21 verankert und bei der in Fig.2 dargestellten Kassette zur Gänze auf den Wickelkern 20 aufgewickelt. Das Magnetband 19 verläuft von dem auf den Wickelkern 20 aufgewickelten Bandwickel über drei zylindrische Bandführungen 22, 23 und 24 zu dem anderen Wickelkern 21. Mittels der Bandführungen 22, 23 und 24 ist das Magnetband 19 längs der vorderen langen Kassettenschmalseite 15 geführt, in der zwei Durchbrüche 25 und 26 vorgesehen sind. Durch die beiden Durchbrüche 25 und 26 hindurch sind zwei geräteseitige Magnetköpfe mit dem Magnetband 19 in Abtastverbindung bringbar, wobei das Magnetband 19 mit Hilfe von zwei in der Kassette verstellbar gehaltenen Andruckfilzen 27 und 28 gegen die Kopfspiegelflächen der beiden Magnetköpfe gedrückt wird. Bei den beiden Magnetköpfen handelt es sich um einen Aufzeichnungs- und Wiedergabe-Magnetkopf zum Aufzeichnen und Wiedergeben von Sprachsignalen auf beziehungsweise von dem Magnetband 19 und einen Lösch-Magnetkopf zum Löschen von Sprachsignalen von dem Magnetband 19.

Die Kassette 5 ist in zwei zueinander gewendeten Lagen in das Gerät 1 einsetzbar, wobei beim Einsetzen der Kassette die geräteseitigen Wickeldorne 6 und 7 je nach Lage der Kassette durch eine der beiden Kassettenhauptseiten 13 beziehungsweise 14 hindurch mit den Wickelkernen 20 und 21 in Antriebsverbindung treten, so daß bei in das Gerät eingesetzter Kassette 5 jeder der beiden Wickeldorne 6 und 7 mit einem der beiden Wickelkerne 20 und 21 zum Antreiben des Magnetbandes 19 in Antriebsverbindung steht. Bei dem vorliegenden Gerät 1 erfolgt der Antrieb des Magnetbandes 19 in allen Bandlauf-Betriebsarten nur durch Antreiben eines der beiden Wickeldorne 6 und 7.

Im folgenden ist anhand der Figuren 3 und 4 der im Zusammenhang mit der Erfindung wesentliche Teil des Gerätes 1 gemäß Fig.1 beschrieben. Zwischen zwei langen Seitenwänden 29 und 30, von denen die Seitenwand 29 an der langen Geräteschmalseite 3 liegt, und einer Bodenwand 31 des Gerätegehäuses ist eine Montageplatte 32 festgehalten, die neben den Seitenwänden 29 und 30 je einen abgewinkelten Plattenteil aufweist und in der ein Durchbruch 33 vorgesehen ist, dessen Zweck noch im folgenden erläutert ist. In die Montageplatte 32 sind zwei Achsen 34 und 35 drehfest eingesetzt. Auf der Achse 34 ist der Vorlauf-Wickeldorn 6 und auf der Achse 35 ist der Rücklauf-Wickeldorn 7 drehbar gelagert. Jeder der beiden Wickeldorne 6 und 7 ist mit einem von zwei je zu einem der beiden Wickeldorne koaxial angeordneten Wickeldornrädern 36 und 37 drehfest verbunden. Das mit dem Vorlauf-Wickeldorn 6 drehfest verbundene Wickeldornrad 36 ist als Reibrad ausgebildet. Das mit dem Rücklauf-Wickeldorn 7 drehfest verbundene Wickeldornrad 37 ist als Schneckenrad, was als spezielle Ausbildung eines Zahnrades zu klassifizieren ist, ausgebildet. Die beiden Wickeldornräder 36 und 37 sind an die den Wickeldornrädern zugewandte Kassettenhauptseite 14 angrenzend im wesentlichen auf demselben axialen Niveau 38 angeordnet, das in den Figuren 4 und 5 mit einer strichpunktierten Linie angegeben ist.

Zum Antreiben der beiden Wickeldornräder 36 und 37 ist im Gerät 1 eine Antriebseinrichtung 39 vorgesehen. Die Antriebseinrichtung 39 weist auf einem quer zu den Achsen 34 und 35 der Wickeldorne 6 und 7 verstellbaren Lagerbock 40 eine zu den Achsen der Wickeldorne parallele, drehbar gelagerte Antriebswelle 41 auf. Der Lagerbock 40 ist um eine in die Montageplatte 32 drehfest eingesetzte Achse 42 verschwenkbar und sein der Bodenwand 31 zugewandter Teil ist auf dem Niveau der Montageplatte 32 angeordnet und befindet sich in dem Durchbruch 33 in der Montageplatte 32, wie dies aus den Figuren 4 und 5 ersichtlich ist. Auf der Antriebswelle 41 ist ein von einem an der Montageplatte 32 befestigten Motor 43 her rotierend antreibbares Treibrad 44 angebracht, das als Pesenrad ausgebildet ist. Auf der Motorwelle 45 des Motors 43 ist ein weiteres Pesenrad 46 angebracht, das über eine Pese 47 das Pesenrad 44 antreibt.

Die Antriebswelle 41 weist einen ersten Wellenabschnitt 48 und einen zweiten Wellenabschnitt 49 auf, wie aus den Figuren 4 und 5 ersichtlich ist. Von diesen beiden Wellenabschnitten 48 und 49 liegt der erste Wellenabschnitt 48 auf dem Niveau 38 der beiden Wickeldornräder 36 und 37. Der zweite Wellenabschnitt 49 liegt auf einem zwischen dem Niveau 38 der Wickeldornräder 36 und 37 und dem Niveau 50 der von den Wickeldornrädern 36 und 37 abgewandten Kassettenhauptseite 13 liegenden Niveau 51. In den Figuren 4 und 5 sind die beiden Niveaus 50 und 51 je mit einer strichpunktierten Linie angegeben. Von den beiden Wellenabschnitten 48 und 49 her ist durch Verstellen des Lagerbockes 40 wahlweise eines der beiden Wickeldornräder 36 und 37 antreibbar. Bei vorliegendem Gerät 1 ist vom ersten Wellenabschnitt 48 her das Wickeldornrad 36 und vom zweiten Wellenabschnitt 49 her das Wickeldornrad 37 antreibbar. Dabei ist zwischen dem zweiten Wellenabschnitt 49 und dem von diesem her antreibbaren Wickeldornrad 37 eine den Niveauunterschied zwischen ihren Niveaus 51 und 38 ausgleichende Antriebsverbindung 52 vorgesehen, die im folgenden noch detailliert beschrieben ist.

Wie aus den Figuren 4 und 5 ersichtlich ist, ist bei vorliegendem Gerät 1 das auf der Antriebswelle 41 angebrachte Treibrad 44 ebenfalls auf einem zwischen dem Niveau 38 der Wickeldornräder 36 und 37 und dem Niveau 50 der von den Wickeldornrädern 36 und 37 abgewandten Kassettenhauptseite 13 liegenden Niveau 53 angeordnet, das in den Figuren 4 und 5 mit einer strichpunktierten Linie angegeben ist. Auf diese Weise ist erreicht, daß das Treibrad 44 innerhalb des Höhenbereiches der Kassette 5 liegt, so daß die Unterbringung des Treibrades in Höhenrichtung der Kassette zu dem Raumbedarf der Kassette keinen zusätzlichen Raumbedarf erfodert und daher die Bauhöhe zwischen der Geräteoberseite 2 und der Montageplatte 32 im wesentlichen nur durch den Raumbedarf für die Kassette 5 und den für die Unterbringung der Wickeldornräder 36 und 37 erforderlichen Raumbedarf bestimmt ist und folglich einen minimalen Wert aufweist. Aufgrund dieser minimalen Bauhöhe zwischen der Geräteoberseite 2 und der Montageplatte 32 weist auch die gesamte Gerätehöhe, also die Gerätedicke, die sich bei vorliegendem Gerät aus der vorgenannten Bauhöhe und der Höhe eines zwischen der Montageplatte 32 und der Bodenwand 31 zur Unterbringung einer Printplatte samt ihrer Bestückung vorgesehenen Printaufnahmeraumes zusammensetzt, einen möglichst geringen Wert auf. Das Treibrad 44 liegt dabei im Bereich der näher bei dem Vorlauf-Wickeldorn 6 befindlichen kurzen Kassettenschmalseite 18 neben der Kassette 5. Hiedurch ist erreicht, daß das Treibrad 44 innerhalb des Breitenbereiches der Kassette 5 liegt, so daß die Unterbringung des Treibrades in Breitenrichtung der Kassette zu dem Raumbedarf der Kassette keinen zusätzlichen Raumbedarf erfordert und daher die Geräteabmessung in dieser Richtung im wesentlichen nur durch den Raumbedarf für die Kassette bestimmt sein kann und folglich ebenfalls einen minimalen Wert aufweisen kann. Aufgrund dieser Anordnung des Treibrades 44 sind die Voraussetzungen geschaffen, daß das Gerät möglichst flach und möglichst schmal ausgebildet werden kann, so daß das Gerät bequem in Taschen von Sakkos und dergleichen untergebracht werden kann.

Wie aus den Figuren 4 und 5 weiter ersichtlich ist, weist das Niveau 53 des auf der Antriebswelle 41 angebrachten Treibrades 44 in axialer Richtung der Antriebswelle 41 einen größeren Abstand von dem Niveau 38 der Wickeldornräder 36 und 37 auf als das Niveau 51 des zweiten Wellenabschnittes 49 der Antriebswelle 41. Auf diese Weise ist erreicht, daß das Treibrad 44 möglichst nahe bei dem Niveau 50 der von den Wickeldornrädern 36 und 37 abgewandten Kassettenhauptseite 13 liegt. Hiedurch ist das Treibrad 44 und das auf der Motorwelle 45 des Motors 43 angebrachte, über die Pese 47 mit dem Treibrad 44 verbundene weitere Pesenrad 46 in einem möglichst großen Abstand von der Bodenwand 31 beziehungsweise der Montageplatte 32 angeordnet, so daß ein relativ großer Raum zur Unterbringung des Motors 43 erhalten wird und daher vorteilhafterweise die Bauhöhe des Motors relativ frei gewählt werden kann.

Wie bereits erwähnt, ist bei dem Gerät 1 das mit dem Vorlauf-Wickeldorn 6 drehfest verbundene, als Reibrad ausgebildete Wickeldornrad 36 von dem ersten Wellenabschnitt 48 der Antriebswelle 41 her antreibbar. Hiefür ist ein weiteres Reibrad 54 vorgesehen, über das das mit dem Vorlauf-Wickeldorn 6 drehfest verbundene Reibrad 36 antreibbar ist. Das weitere Reibrad 54 ist über eine Achse 55 auf einem verschwenkbar gelagerten, abgestuft ausgebildeten Hebel 56 drehbar gelagert. Der Hebel 56 ist um eine in die Montageplatte 32 drehfest eingesetzte Achse 57 verschwenkbar und sein die Achse 55 tragender abgestufter Teil ist auf dem Niveau der Montageplatte 32 angeordnet und befindet sich in dem Durchbruch 33 in der Montageplatte 32, wie dies aus Fig.4 ersichtlich ist. Mit dem weiteren Reibrad 54 ist durch Verstellen des Lagerbockes 40 der erste Wellenabschnitt 48 der Antriebswelle 41 in Antriebsverbindung bringbar. Mit dem weiteren Reibrad 54 ist eine besonders einfache, stabile und betriebssichere Antriebsverbindung zwischen der Antriebswelle 41 und dem mit dem Vorlauf-Wickeldorn 6 drehfest verbundenen Reibrad 36 realisiert, mit der ein gleichmäßiger, wobbelfreier Antrieb für das in der Kassette 5 untergebrachte Magnetband 19 in der Betriebsart "Normaler Vorlauf" erreicht wird.

Im Bereich des Lagerbockes 40 ist eine zum Verstellen desselben vorgesehene Verstellfeder 58 angeordnet, mit der der Lagerbock 40 zum Verstellen desselben in Richtung zu dem weiteren Reibrad 54 hin belastbar ist. Die Verstellfeder 58 ist einfach als Schenkelfeder ausgebildet, deren gewundener Mittelabschnitt auf einen von der Montageplatte 32 abstehenden Stift 59 aufgeschoben ist. Mit einem zweifach abgewinkelten ersten Schenkel 60 der Verstellfeder 58 ist der Lagerbock 40 belastbar, indem sich der erste Schenkel 60 an einem vom Lagerbock 40 abstehenden Fortsatz 61 abstützt. Mit einem zweiten Schenkel 62 stützt sich die Verstellfeder 58 an einem an der Montageplatte 32 vorgesehenen stationären Anschlag 63 ab. Mit der Verstellfeder 58 ist über den Lagerbock 40 der erste Wellenabschnitt 48 der Antriebswelle 41 mit dem weiteren Reibrad 54 in Antriebsverbindung bringbar. Wenn die Verstellfeder 58 mit ihrem ersten Schenkel 60 gegen den Lagerbock 40 drückt, wird derselbe zum weiteren Reibrad 54 hin verschwenkt, wobei der erste Wellenabschnitt 48 gegen das weitere Reibrad 54 stößt und dieses durch Verschwenken des Hebels 56 ebenfalls verstellt wird, bis dasselbe an dem mit dem Vorlauf-Wickeldorn 6 drehfest verbundenen Reibrad 36 anliegt. Mit der Verstellfeder 58 ist ein durch Wahl ihrer Federkraft wählbarer, durch diese Federkraft festgelegter, genau definierter Anpreßdruck zwischen dem ersten Wellenabschnitt 48 und dem weiteren Reibrad 54 sowie zwischen dem weiteren Reibrad 54 und dem mit dem Vorlauf-Wickeldorn 6 drehfest verbundenen Reibrad 36 erreicht, was im Hinblick auf eine ausreichend hohe Reibwirkung für eine einwandfreie Kraftübertragung und zugleich eine lange Lebensdauer der Reibradverbindung vorteilhaft ist.

Auf dem zweiten Wellenabschnitt 49 der Antriebswelle 41 ist ein Stirnzahnrad 64 angebracht, das durch Verstellen des Lagerbockes 40 mit einem Zahnradgetriebe 65 in Eingriff bringbar ist, über das das mit dem Rücklauf-Wickeldorn 7 drehfest verbundene, als Schneckenrad ausgebildete Wickeldornrad 37 antreibbar ist, wobei in dem Zahnradgetriebe 65 die den Niveaunterschied zwischen dem Niveau 51 des zweiten Wellenabschnittes 49 und dem Niveau 38 der Wickeldornräder 36 und 37 ausgleichende Antriebsverbindung 52 vorgesehen ist. Dabei ist mit dem auf dem zweiten Wellenabschnitt 49 angebrachten Stirnzahnrad 64 über einen ersten Getriebeabschnitt des Zahnradgetriebes 65, mit dem durch Verstellen des Lagerbockes 40 das auf der Antriebswelle 41 angebrachte Stirnzahnrad 64 in Eingriff bringbar ist und der die Antriebsverbindung 52 zum Ausgleichen des Niveauunterschiedes zwischen dem Niveau 51 des Stirnzahnrades 64 und dem Niveau 38 der Wickeldornräder 36 und 37 bildet, eine im wesentlichen auf dem Niveau 38 der Wickeldornräder 36 und 37 verlaufende, einen flexiblen Bereich 66 aufweisende Wellenverbindung 67 antreibbar. Die Wellenverbindung 67 treibt über einen im wesentlichen auf dem Niveau 38 der Wickeldornräder 36 und 37 angeordneten zweiten Getriebeabschnitt 68 des Zahnradgetriebes 65 das mit dem Rücklauf-Wickeldorn 7 drehfest verbundene Schneckenrad 37 an.

Der flexible Bereich 66 der Wellenverbindung 67 ist hiebei einfach durch eine Schraubenfeder gebildet, die eine übliche, standardmäßige Ausbildung aufweist. Die Schraubenfeder 66 ist mit ihrem einen Ende auf eine von dem ersten Getriebeabschnitt 52 angetriebene erste starre Welle 69 und mit ihrem anderen Ende auf eine den zweiten Getriebeabschnitt 68 antreibende zweite starre Welle 70 drehfest aufgesetzt. Die Schraubenfeder könnte mit ihren endseitigen Windungen auch lose auf die beiden starren Wellen aufgesetzt sein und abgewinkelte Federenden aufweisen, die je in Richtung der betreffenden Welle verlaufen und die zur Übertragung der Drehbewegung je mit einem an der betreffenden Welle vorgesehenen Mitnehmeranschlag zusammenwirken; bei einer solchen Schraubenfeder ist deren Länge weniger kritisch. Die erste Welle 69 ist mit Hilfe von zwei an der Montageplatte 32 vorgesehenen stationären Lagern 71 und 72 drehbar gelagert. Die zweite Welle 70 ist mit Hilfe von zwei auf einem quer zu den Achsen 34 und 35 der Wickeldorne 6 und 7 verstellbaren Träger 73 vorgesehenen Lagern 74 und 75 drehbar gelagert. Der Träger 73 ist um eine in die Montageplatte 32 drehfest eingesetzte Achse 76 verschwenkbar, so daß auf diese Weise auch die zweite Welle 70 verschwenkbar ist.

Der erste Getriebeabschnitt 52 ist durch ein weiteres Stirnzahnrad 78, das um eine in die Montageplatte 32 drehfest eingesetzte Achse 77 drehbar ist und mit dem durch Verstellen des Lagerbockes 40 das auf dem zweiten Wellenabschnitt 49 angebrachte Stirnzahnrad 64 in Eingriff bringbar ist, ein mit dem weiteren Stirnzahnrad 78 koaxial verbundenes Kronenzahnrad 79, dessen Zähne in Richtung zu dem Niveau 38 der Wickeldornräder 36 und 37 weisen, und ein mit dem Kronenzahnrad 79 in Eingriff stehendes Stirnzahnritzel 80 gebildet, das mit der ersten Welle 69 der Wellenverbindung 67 verbunden ist. Dabei sind das weitere Stirnzahnrad 78 und das Kronenzahnrad 79 einfach einstückig miteinander verbunden.

Der zweite Getriebeabschnitt 68 ist durch eine mit der zweiten Welle 70 der Wellenverbindung 67 drehfest verbundene mehrgängige Schnecke gebildet, die mit der zweiten Welle 70 auf dem quer zu den Achsen 34 und 35 der Wickeldorne 6 und 7 verstellbaren Träger 73 drehbar gelagert ist und die durch Verstellen des Trägers 73 mit dem mit dem Rücklauf-Wickeldorn 7 drehfest verbundenen Schneckenrad 37 in Eingriff bringbar ist.

Im Bereich des Trägers 73 ist eine zum Verstellen desselben vorgesehene weitere Verstellfeder 81 angeordnet, die den Träger 73 zum Verstellen desselben in Richtung zu einem an der Montageplatte 32 vorgesehenen stationären Anschlag 82 für denselben hin belastet und mit der über den Träger 73 die Schnecke 68 von dem mit dem Rücklauf-Wickeldorn 7 drehfest verbundenen Schneckenrad 37 außer Eingriff bringbar ist. Bei mit dem Schneckenrad 37 in Eingriff befindlicher Schnecke 68 stützt sich der Träger 73 an einem weiteren an der Montageplatte 32 vorgesehenen stationären Anschlag 83 ab, über den die Eingriffstiefe zwischen den Verzahnungen der Schnecke 68 und dem Schneckenrad 37 festgelegt ist. Die weitere Verstellfeder 81 ist ebenfalls einfach als zweischenkelige Schenkelfeder ausgebildet, die mit ihrem gewundenen Mittelabschnitt auf einen an der Montageplatte 32 vorgesehenen stationären Stift 84 aufgesetzt ist. Ein zweifach abgewinkelter erster Schenkel 85 der Schenkelfeder 81 ist in einen Schlitz 86 am Träger 73 eingeführt und auf diese Weise am Träger abgestützt. Ein zweiter Schenkel 87 der Schenkelfeder 81 stützt sich an einer verstellbar geführten zylindrischen Rastrolle 88 ab, die mit Hilfe von zwei von der Montageplatte 32 abstehenden, L-förmigen Führungswinkeln 89 und 90 quer zu der Seitenwand 29 und parallel zur Montageplatte 32 geführt ist.

Mit dem vorstehend beschriebenen Zahnradgetriebe 65 ist eine robuste und betriebssichere Antriebsverbindung zwischen der Antriebswelle 41 und dem mit dem Rücklauf-Wickeldorn 7 drehfest verbundenen Schneckenrad 37 realisiert, die einen guten Wirkungsgrad aufweist, so daß ein sicherer Antrieb des in der Kassette 5 untergebrachten Magnetbandes 19 in der Betriebsart "Schneller Rücklauf" erreicht ist. Durch das weitere Stirnzahnrad 78 und das mit diesem einstückig verbundene Kronenzahnrad 79 und das mit diesem in Eingriff stehende Stirnzahnritzel 80 ist eine besonders einfache, raumsparende und billige Antriebsverbindung 52 zum Ausgleichen des Niveauunterschiedes zwischen dem Niveau 51 des auf der Antriebswelle 41 angebrachten Stirnzahnrades 64 und dem Niveau 38 der Wickeldornräder 36 und 37 erreicht. Die Wellenverbindung 67 mit ihrem durch die Schraubenfeder 66 gebildeten flexiblen Bereich stellt eine besonders raumsparende Antriebsverbindung dar, was hinsichtlich der Erzielung kleiner Geräteabmessungen vorteilhaft ist. Mit dem durch die mehrgängige Schnecke 68 und das Schneckenrad 37 gebildeten Schneckengetriebe wird auf besonders einfache Weise eine Kraftübertragung von der zweiten Welle 70 zu dem Rücklauf-Wickeldorn 7, deren Achsrichtungen sich rechtwinkelig kreuzen, erreicht. Ein solches Schneckengetriebe ist weiters im Hinblick auf einen geringen Raumbedarf vorteilhaft.

Bei dem vorliegenden Gerät 1 ist der Motor 43 und das auf seiner Motorwelle 45 befestigte weitere Pesenrad 46 gegenüber dem als Treibrad vorgesehenen Pesenrad 44 so angeordnet, daß die Pese 47 über das Pesenrad 44 auf den verstellbaren Lagerbock 40 eine Kraft ausübt, die den Lagerbock 40 zum Ineingriffbringen des auf dem zweiten Wellenabschnitt 49 der Antriebswelle 41 angebrachten Stirnzahnrades 64 mit dem Zahnradgetriebe 65 zum Antreiben des mit dem Rücklauf-Wickeldorn 7 drehfest verbundenen Schneckenrades 37 belastet. Auf diese Weise ist das Stirnzahnrad 64 mit dem weiteren Stirnzahnrad 78 nur durch die Kraftwirkung der Pese 47 in Eingriff bringbar, so daß sich separate Verstellmittel zum Ineingriffbringen dieser beiden Stirnzahnräder erübrigen.

Wie erwähnt, sind mit dem Schiebeknopf 11, der in Längsrichtung der Geräteschmalseite 3 hin und her verschiebbar ist, die Betriebsarten "Schneller Vorlauf", "Normaler Vorlauf", "Stop" und "Schneller Rücklauf " einschaltbar. In Fig.3 ist der Schiebeknopf 11 in jener Betriebsstellung dargestellt, die der Betriebsart "Stop" entspricht. Der Schiebeknopf 11 ist mit einem Fortsatz 91 desselben, der einen in der Seitenwand 29 und in dem zu dieser benachbarten abgewinkelten Randbereich 92 der Montageplatte 32 vorgesehenen Durchbruch 93 durchsetzt, mit einem an der Montageplatte 32 in seiner Längsrichtung verschiebbar geführten Steuerschieber 94 verbunden, der in Fig.3 nur teilweise dargestellt ist. Der Steuerschieber 94 ist zur Steuerung der Verstellung des Trägers 73 für die zweite Welle 70 samt der Schnecke 68 und der Verstellung des Lagerbockes 40 für die Antriebswelle 41 samt dem Treibrad 44 vorgesehen. Der Steuerschieber 94 ist über den Schiebeknopf 11 von Hand aus zwischen einer Schnellvorlauf-Betriebsstellung, einer Vorlauf-Betriebsstellung, einer Stop-Betriebsstellung und einer Rücklauf-Betriebsstellung verschiebbar. Mit dem Steuerschieber 94 ist eine Bremse für das mit dem Vorlauf-Wickeldorn 6 drehfest verbundene Reibrad 36 und eine elektrische Schalteinrichtung zum Anschalten des Motors 43 an mindestens eine Spannung und zum Ansteuern weiterer elektrischer Einrichtungen, beispielsweise eines Aufnahme- und Wiedergabeverstärkers, betätigbar, was aber in der Fig.3 der Einfachheit halber und, weil dies für die Erfindung nicht wesentlich ist, nicht dargestellt ist.

Der Steuerschieber 94 weist zwei rinnenförmige Rastvertiefungen 95 und 96 auf, von denen die Rastvertiefung 95 der Stop-Betriebsstellung und die Rastvertiefung 96 der Vorlauf-Betriebsstellung zugeordnet ist. In diese Rastvertiefungen 95 und 96 ist je nach Betriebsstellung des Steuerschiebers 94 die Rastrolle 88 mit dem zweiten Schenkel 87 der weiteren Verstellfeder 81 hineingedrückt. Die Verstellfeder 81 für den Träger 73 erfüllt somit eine zusätzliche Funktion als Rastfeder zum Belasten der Rastrolle 88. Mit der Rastrolle 88 ist der Steuerschieber 94 in den beiden vorgenannten Betriebsstellungen verrastet festgehalten. Wenn der Steuerschieber 94 aus der in Fig.3 dargestellten Stop-Betriebsstellung in Richtung des Pfeiles 97 so weit verschoben wird, bis der Fortsatz 91 des Schiebeknopfes 11 an der Begrenzungswand 98 des Durchbruches 93 anstößt, dann nimmt der Steuerschieber seine Rücklauf-Betriebsstellung ein, in der derselbe nicht verrastet wird. Bei dieser Verstellung wird eine nicht dargestellte Rückstellfeder gespannt, die den Steuerschieber 94 nach dem Loslassen des Schiebeknopfes 11 aus seiner Rücklauf-Betriebsstellung in seine Stop-Betriebsstellung zurückverstellt, in der derselbe verrastet wird. Wenn der Steuerschieber 94 aus der in Fig.3 dargestellten Stop-Betriebsstellung in Richtung des Pfeiles 99 über die Vorlauf-Betriebsstellung hinaus so weit verschoben wird, bis der Fortsatz 91 des Schiebeknopfes 11 an der Begrenzungswand 100 des Durchbruches 93 anstößt, dann nimmt der Steuerschieber 94 seine Schnellvorlauf-Betriebsstellung ein, in der derselbe ebenfalls nicht verrastet wird. Bei einer Verstellung des Steuerschiebers 94 in seine Schnellvorlauf-Betriebsstellung wird ebenfalls eine nicht dargestellte Rückstellfeder gespannt, die den Steuerschieber nach dem Loslassen des Schiebeknopfes 11 aus seiner Schnellvorlauf-Betriebsstellung in seine Vorlauf-Betriebsstellung zurückverstellt, in der derselbe verrastet wird.

Der Steuerschieber 94 weist zur Steuerung der Verstellung des Lagerbockes 40 einen ersten Mitnehmer, der durch eine Abstufung 101 gebildet ist, und zur Steuerung der Verstellung des Trägers 73 einen zweiten Mitnehmer auf, der durch einen Ansatz 102 gebildet ist. In der Rücklauf-Betriebsstellung hält der Steuerschieber 94 über seine Abstufung 101 die Verstellfeder 58, mit der über ihren ersten Schenkel 60 der Lagerbock 40 belastbar ist, über ihren ersten Schenkel 60 zum Aufheben der Belastung des Lagerbockes 40 verstellt. Weiters hält in der Rücklauf-Betriebsstellung der Steuerschieber 94 über seinen Ansatz 102 die weitere Verstellfeder 81, die den Träger 73 mit ihrem ersten Schenkel 85 belastet, über den ersten Schenkel 85 zum Ineingriffhalten der Schnecke 68 mit dem mit dem Rücklauf-Wickeldorn 7 drehfest verbundenen Schneckenrad 37 verstellt. In der Vorlauf-Betriebsstellung des Steuerschiebers 94 ist derselbe mit seiner Abstufung 101 und seinem Ansatz 102 von den beiden Verstellfedern 58 und 81 freigestellt, wobei die Abstufung 101 vom ersten Schenkel 60 der Verstellfeder 58 und der Ansatz 102 vom ersten Schenkel 85 der weiteren Verstellfeder 81 abgehoben ist.

In der Fig.3 ist der Steuerschieber 94 in seiner Stop-Betriebsstellung befindlich dargestellt, in der die Rastrolle 88 in die Rastvertiefung 95 hineingedrückt ist. Dabei steht das an der Antriebswelle 41 angebrachte Stirnzahnrad 64 aufgrund der Kraftwirkung der Pese 47 bereits mit dem weiteren Stirnzahnrad 78 des Zahnradgetriebes 65 in Eingriff und befindet sich die Schnecke 68 in Eingriff mit dem Schneckenrad 37, weil die weitere Verstellfeder 81 über ihren ersten Schenkel 85 den Träger 73 verstellt hält, wobei sich der Träger 73 an dem weiteren stationären Anschlag 83 abstützt. Der Motor 43 des Gerätes 1 ist aber in dieser Stop-Betriebsstellung an keine Spannung angeschaltet, so daß der Motor stillsteht und daher kein Antrieb des in der Kassette 5 untergebrachten Magnetbandes 19 erfolgt.

Wenn der Steuerschieber 94 mit dem Schiebeknopf 11 von Hand aus von seiner in Fig.3 dargestellten Stop-Betriebsstellung in Richtung des Pfeiles 97 in seine Rücklauf-Betriebsstellung verschoben wird, wird die nicht dargestellte Rückstellfeder gespannt und über die Abstufung 101 der erste Schenkel 60 der Verstellfeder 58 vom Fortsatz 61 des Lagerbockes 40 abgehoben und dabei von der Pese 47 das an der Antriebswelle 41 angebrachte Stirnzahnrad 64 mit dem weiteren Stirnzahnrad 78 in Eingriff gehalten, wobei die Antriebsverbindung von der Antriebswelle 41 zu dem mit dem Vorlauf-Wickeldorn 6 drehfest verbundenen Reibrad 36 unterbrochen ist und daher keine Belastung beim Antreiben des Magnetbandes 19 in der Betriebsart "Schneller Rücklauf " bildet, wobei das Magnetband 19 von dem mit dem Vorlauf-Wickeldorn 6 zusammenwirkenden Wickelkern abgezogen wird. Weiters wird über den Ansatz 102 und den ersten Schenkel 85 der weiteren Verstellfeder 81 und den Träger 73 die Schnecke 68 mit dem Schneckenrad 37 in Eingriff gehalten. Weiters wird vom Steuerschieber 94 die Bremse für das Reibrad 36 gelüftet und der Motor 43 an eine hohe erste Spannung so angeschaltet, daß der Motor 43 gemäß Fig.3 entgegen dem Uhrzeigersinn mit hoher Drehzahl angetrieben wird. Über das weitere Pesenrad 46, die Pese 47, das Treibrad 44, die Antriebswelle 41, das Stirnzahnrad 64 und das Zahnradgetriebe 65 treibt dabei der Motor 43 den Rücklauf-Wickeldorn 7 gemäß Fig.3 im Uhrzeigersinn mit hoher Drehzahl an, wobei das in der Kassette 5 untergebrachte Magnetband 19 in der Betriebsart "Schneller Rücklauf " mit hoher Fortbewegungsgeschwindigkeit angetrieben und auf den mit dem Rücklauf-Wickeldorn 7 in Antriebsverbindung stehenden Wickelkern aufgewickelt wird. Bei vorliegendem Gerät wird in der Betriebsart "Schneller Rücklauf" das Magnetband etwa siebenmal schneller fortbewegt als in der Betriebsart "Normaler Vorlauf". Nach dem Loslassen des Schiebeknopfes 11 verstellt die Rückstellfeder den nicht verrasteten Steuerschieber 94 selbsttätig in seine Stop-Betriebsstellung zurück, so daß der Antrieb des Magnetbandes 19 beendet wird.

Wenn der Steuerschieber 94 mit dem Schiebeknopf 11 von Hand aus von der in Fig.3 dargestellten Stop-Betriebsstellung in Richtung des Pfeiles 99 in seine Vorlauf-Betriebsstellung verschoben wird, in der die Rastrolle 88 in die Rastvertiefung 96 hineingedrückt ist und auf diese Weise der Steuerschieber 94 verrastet festgehalten ist, dann hebt die Abstufung 101 vom ersten Schenkel 60 der Verstellfeder 58 und der Ansatz 102 vom ersten Schenkel 85 der weiteren Verstellfeder 81 ab, so daß der Steuerschieber 94 von den beiden Verstellfedern 58 und 81 freigestellt ist. Dadurch drückt dann die Verstellfeder 58 mit ihrem ersten Schenkel 60 gegen den Fortsatz 61 des Lagerbockes 40, wodurch der Lagerbock 40 in Richtung zum weiteren Reibrad 54 hin verschenkt wird. Dabei stößt die Antriebswelle 41 mit ihrem ersten Wellenabschnitt 48 gegen das weitere Reibrad 54 und verschwenkt dadurch das weitere Reibrad 54 so weit, bis dasselbe gegen das mit dem Vorlauf-Wickeldorn 6 drehfest verbundene Reibrad 36 stößt. Auf diese Weise ist dann die Antriebsverbindung zwischen der Antriebswelle 41 und dem Reibrad 36 hergestellt. Da der Ansatz 102 vom ersten Schenkel 85 der weiteren Verstellfeder 81 freigestellt wird, kann die weitere Verstellfeder 81 über ihren ersten Schenkel 85 den Träger 73 in Richtung zum stationären Anschlag 82 hin verschwenken, bis der Träger 73 sich an dem stationären Anschlag 82 abstützt, wobei sich dann die Schnecke 68 außer Eingriff vom Schneckenrad 37 befindet und daher keine Hemmung beim Antreiben des Magnetbandes 19 in der Betriebsart "Normaler Vorlauf" bildet, wobei das Magnetband 19 von dem mit dem Rücklauf-Wickeldorn 7 zusammenwirkenden Wickelkern abgezogen wird. Bei der Verstellung des Steuerschiebers 94 in seine Vorlauf-Betriebsstellung wird vom Steuerschieber 94 die Bremse für das Reibrad 36 gelüftet und der Motor 43 an eine niedrige zweite Spannung so angeschaltet, daß der Motor 43 gemäß Fig.3 auch entgegen dem Uhrzeigersinn, aber mit niedriger Drehzahl angetrieben wird. Über das weitere Pesenrad 46, die Pese 47, das Treibrad 44, die Antriebswelle 41, das weitere Reibrad 54 und das Reibrad 36 treibt der Motor 43 dabei den Vorlauf-Wickeldorn 6 gemäß Fig.3 entgegen dem Uhrzeigersinn mit niedriger Drehzahl an, wobei dann das in der Kassette 5 untergebrachte Magnetband 19 in der Betriebsart "Normaler Vorlauf " mit niedriger Fortbewegungsgeschwindigkeit angetrieben und auf den mit dem Vorlauf-Wickeldorn 6 in Antriebsverbindung stehenden Wickelkern aufgewickelt wird.

Wenn der Steuerschieber mit dem Schiebeknopf 11 von seiner Vorlauf-Betriebsstellung in seine Stop-Betriebsstellung zurückverstellt wird, hebt der erste Wellenabschnitt 48 der Antriebswelle 41 vom weiteren Reibrad 54 ab und kommt das auf der Antriebswelle 41 angebrachte Stirnzahnritzel 64 wieder mit dem weiteren Stirnzahnritzel 78 des Zahnradgetriebes 65 und die Schnecke 68 wieder mit dem Schneckenrad 37 in Eingriff, wobei dann von dem zwar bereits abgeschalteten, aber noch auslaufenden Motor 43 der Rücklauf-Wickeldorn 7 kurzzeitig gemäß Fig.3 im Uhrzeigersinn angetrieben wird. Auf diese Weise wird das Magnetband 19 automatisch um ein kurzes Stück zurückbewegt, so daß eine beim Abschalten der Betriebsart "Normaler Vorlauf" dem Aufzeichnungs- und Wiedergabe-Magnetkopf des Gerätes gegenüberliegende Diktatstelle gegenüber diesem Magnetkopf um das kurze Stück zurückbewegt wird und daher beim neuerlichen Einschalten der Betriebsart "Normaler Vorlauf", im Wiedergabebetrieb wiedergegeben wird. Hiedurch kann bei einem Diktiervorgang nach jeder Diktatunterbrechung das jeweilige Diktatende bei der Diktatfortsetzung automatisch wiedergegeben und zu Kontrollzwecken angehört werden.

Wenn der Steuerschieber 94 mit dem Schiebeknopf 11 von Hand aus entgegen der Kraft der nicht dargestellten Rückstellfeder von der soeben beschriebenen Vorlauf-Betriebsstellung weiter in Richtung des Pfeiles 99 in seine Schnellvorlauf-Betriebsstellung verschoben wird, dann ändert sich an der mechanischen Situation nichts gegenüber der vorstehend beschriebenen Situation in der Betriebsart "Normaler Vorlauf". Beim Verstellen des Steuerschiebers 94 in seine Schnellvorlauf-Betriebsstellung wird aber vom Steuerschieber der Motor 43 an die gegenüber der niedrigen zweiten Spannung in der Betriebsart "Normaler Vorlauf" höhere erste Spannung so angeschaltet, daß der Motor 43 entgegen dem Uhrzeigersinn mit hoher Drehzahl angetrieben wird. Über die vorstehend beschriebene Antriebsverbindung treibt dann der Motor 43 den Vorlauf-Wickeldorn 6 mit gegenüber der Betriebsart "Normaler Vorlauf" höherer Drehzahl an, wobei das in der Kassette 5 untergebrachte Magnetband 19 in der Betriebsart "Schneller Vorlauf " mit höherer Fortbewegungsgeschwindigkeit als in der Betriebsart "Normaler Vorlauf " angetrieben und auf den mit dem Vorlauf-Wickeldorn 6 in Antriebsverbindung stehenden Wickelkern aufgewickelt wird. Bei vorliegendem Gerät wird in der Betriebsart "Schneller Vorlauf" das Magnetband etwa doppelt so schnell fortbewegt wie in der Betriebsart "Normaler Vorlauf". Nach dem Loslassen des Schiebeknopfes 11 wird der nicht verrastete Steuerschieber 94 von der Rückstellfeder selbsttätig in seine Vorlauf-Betriebsstellung zurückverstellt, in der derselbe über seine Rastvertiefung 96 mit der Rastrolle 88 verrastet wird. Somit wird unmittelbar nach dem Abschalten der Betriebsart "Schneller Vorlauf" im Gerät die Betriebsart "Normaler Vorlauf" eingeschaltet, was zum Aufsuchen einer Diktatstelle eines bereits aufgezeichneten Diktates vorteilhaft ist.

Wie aus vorstehender Beschreibung ersichtlich ist, werden alle Steuerfunktionen für die zum Antreiben der beiden Wickeldorne 6 und 7 erforderlichen Geräteteile nur von dem einen Steuerschieber 94 her vorgenommen, was im Hinblick auf eine einfache Ausbildung und auf genau aufeinander abgestimmte Bewegungsabläufe vorteilhaft ist.

In der Fig.5 ist der Lagerbock 40 des Gerätes 1 gemäß Fig.1 detailliert dargestellt. Der Lagerbock 40 weist einen die Achse 42 umgebenden Hülsenteil 103 auf. Von dem Hülsenteil 103 stehen ein der Montageplatte 32 zugewandter, zweifach abgewinkelt ausgebildeter erster Arm 104, in dem ein Ende der Antriebswelle 41 drehbar gelagert ist und an dem eine die Antriebswelle 41 unterstützende Spurlagerplatte 105 befestigt ist, und ein von der Montageplatte 32 abgewandter, zweifach abgewinkelt ausgebildeter zweiter Arm 106 ab, in dem das andere Ende der Antriebswelle 41 drehbar gelagert ist und an dem eine die Antriebswelle 41 gegen die Spurlagerplatte 105 drückende Blattfeder 107 befestigt ist. Wie die Fig.5 besonders deutlich zeigt, liegt der die Spurlagerplatte 105 tragende Armteil des ersten Armes 104 auf dem Niveau der Montageplatte 32, wobei sich dieser Armteil des Armes 104 in dem Durchbruch 33 in der Montageplatte 32 befindet.

In Fig.6 ist ein Lagerbock 40 eines weiteren Gerätes dargestellt. Bei diesem Gerät grenzt die Bodenwand 31 unmittelbar an die Montageplatte 32, so daß die Gerätedicke hier im wesentlichen nur durch die zur Unterbringung der Kassette und der Wickeldornräder erforderliche Bauhöhe bestimmt ist und folglich einen kleinstmöglichen Wert aufweist, wodurch ein besonders flaches Gerät erhalten wird. Bei dem Lagerbock 40 dieses Gerätes sind die beiden vom Hülsenteil 103 abstehenden Arme 104 und 106 je nur einfach abgewinkelt ausgebildet. Weiters ist bei diesem Lagerbock 40 der mit dem Hülsenteil 103 verbundene erste Arm 104 mit seinem unmittelbar an den Hülsenteil 103 angrenzenden Armteil auf einem Niveau zwischen dem Niveau 38 des als Reibrad wirksamen ersten Wellenabschnittes 48 und dem Niveau 51 des das Stirnzahnrad 64 tragenden zweiten Wellenabschnittes 49 angeordnet und ist die an dem Arm 104 befestigte, die Antriebswelle 41 unterstützende Lagerplatte 105 abgewinkelt ausgebildet, wobei der die Antriebswelle 41 unterstützende Plattenteil nur knapp unterhalb des Niveaus 38 des ersten Wellenabschnittes 48 angeordnet ist. Auf diese Weise ist erreicht, daß der Lagerbock 40 in axialer Richtung der Antriebswelle 41 besonders wenig Raumbedarf in Anspruch nimmt und nicht bis in den Niveaubereich der Montageplatte 32 reicht. Daher erübrigt es sich, in der Montageplatte 32 einen Durchbruch zur Freistellung dieses Lagerbockes 40 vorzusehen.

In der Fig.7 ist ein Teil eines weiteren Gerätes dargestellt, bei dem der Lagerbock 40 zu seiner Verstellung auf einem verschwenkbaren Verstellhebel 108 angebracht ist, indem die Achse 42, um die der Lagerbock 40 verschwenkbar ist, drehfest an einem ersten Arm 109 des Verstellhebels 108 befestigt ist. Der Verstellhebel 108 ist um eine in die Montageplatte 32 drehfest eingesetzte Achse 110 verschwenkbar. An einem zweiten Arm 111 des Verstellhebels 108 greift die Verstellfeder 58 für den Lagerbock 40 mit ihrem ersten Schenkel 60 an, deren zweiter Schenkel 62 sich an dem stationären Anschlag 63 abstützt. Der gewundene Mittelabschnitt der Verstellfeder 58 ist in vorliegendem Fall auf einen zur Achse 110 koaxialen, zylindrischen Ansatz 112 des Verstellhebels 108 aufgesetzt. Der Verstellhebel 108 weist einen Ansatz 113 auf, an dem sich der Lagerbock 40 unter der Kraftwirkung der Pese 47 abstützen kann und über den der Verstellhebel 108 den Lagerbock 40 unter der Kraftwirkung der Verstellfeder 58 verstellen kann. Das freie Ende des zweiten Armes 111 des Verstellhebels 108 ragt in den Bereich des Steuerschiebers 94, so daß der Steuerschieber 94 über den zweiten Arm 111 die Verstellung des Verstellhebels 108 und folglich des Lagerbockes 40 steuern kann.

Die Anordnung des Lagerbockes 40 auf dem Verstellhebel 108 und die Anordnung der Achse 110 des Verstellhebels 108 im Gerät ist dabei so gewählt, daß bei der Verstellung des Lagerbockes 40 zum Ineingriffbringen des auf dem zweiten Wellenabschnitt der Antriebswelle 41 angebrachten Stirnzahnrades 64 mit dem weiteren Stirnzahnrad 78 des Zahnradgetriebes 65 zum Antreiben des mit dem Rücklauf-Wickeldorn drehfest verbundenen Zahnrades das als Treibrad vorgesehene Pesenrad 44 von dem auf der Motorwelle 45 des Motors 43 befestigten weiteren Pesenrad 46 weg verstellt wird, wobei die Pese 47 zwischen dem weiteren Pesenrad 46 und dem Pesenrad 44 zusätzlich gespannt wird. Durch dieses zusätzliche Spannen der Pese 47 in der Betriebsart "Schneller Rücklauf" wird eine höhere Friktion als in der Betriebsart "Normaler Vorlauf" erreicht, was im Hinblick auf einen sicheren Antrieb des Magnetbandes auch bei schwergängigen Kassetten in der Betriebsart "Schneller Rücklauf" und einen energiesparenden Antrieb des Magnetbandes in der Betriebsart "Normaler Vorlauf" vorteilhaft ist. Durch einen solchen energiesparenden Antrieb in der Betriebsart "Normaler Vorlauf" wird vorteilhafterweise eine lange Lebensdauer von Batterien zur Speisung des Motors erreicht.

Die Erfindung ist auf die vorstehend beschriebenen Ausführungsbeispiele nicht beschränkt. Beispielsweise kann das auf der Antriebswelle angebrachte Treibrad auch als Reibrad ausgebildet sein und vom Motor her über ein Reibradgetriebe angetrieben werden. Auf dem ersten Wellenabschnitt der Antriebswelle kann ein Reibrad mit größerem Durchmesser als die Antriebswelle angebracht sein, das mit dem weiteren Reibrad zum Antreiben des mit dem Vorlauf-Wickeldorn drehfest verbundenen Reibrades in Antriebsverbindung bringbar ist. Auch kann auf dem ersten Wellenabschnitt ein Pesenrad angebracht sein, von dem über einen Pesenantrieb ein mit dem Vorlauf-Wickeldorn drehfest verbundenes, als Pesenrad ausgebildetes Wickeldornrad antreibbar ist. Bei auf dem zweiten Wellenabschnitt angebrachtem Stirnzahnrad kann zum Antreiben des Rücklauf-Wickeldornes auch ein nur aus Stirnzahnrädern bestehendes Zahnradgetriebe vorgesehen sein, daß zum Ausgleichen des Niveauunterschiedes zwischen dem Niveau des auf der Antriebswelle angebrachten Stirnzahnrades und dem Niveau der Wickeldornräder ausgebildet ist und hiefür beispielsweise zumindest zwei zueinander koaxial angeordnete Stirnzahnräder aufweist. Es kann auch auf dem zweiten Wellenabschnitt ein Reibrad angebracht sein, von dem über ein Reibradgetriebe, das dabei zum Ausgleichen des Niveauunterschiedes zwischen dem Niveau dieses Reibrades und dem Niveau der Wickeldornräder ausgebildet ist, das mit dem Vorlauf-Wickeldorn drehfest verbundene, als Reibrad ausgebildete Wickeldornrad antreibbar ist. Es kann auch auf dem ersten Wellenabschnitt ein Stirnzahnrad angebracht sein, von dem über ein nur aus Stirnzahnrädern bestehendes Zahnradgetriebe der Rücklauf-Wickeldorn antreibbar ist. Als raumsparende Antriebsverbindung zum Rücklauf-Wickeldorn kann auch ein Pesenantrieb vorgesehen sein, der durch Verstellen des Lagerbockes von einem der beiden Wellenabschnitte her antreibbar ist. Bei den Geräten gemäß dem ersten und dritten Ausführungsbeispiel überragen die Motoren die Kassetten in deren Breitenrichtung. Ein solcher Motor kann aber ebenso wie das Treibrad innerhalb des Breitenbereiches einer Kassette in einem Gerät angeordnet werden, wobei dann die Gerätebreite praktisch nur durch die Kassettenbreite bestimmt ist und besonders klein sein kann.

## Patentansprüche

1. Aufzeichnungs- und/oder Wiedergabegerät (1) für einen bandförmigen Aufzeichnungsträger (19), der in einer in das Gerät (1) einsetzbaren Kassette (5) mit zwei nebeneinanderliegenden, rotierend antreibbaren Wickelkernen (20, 21) zum Aufwickeln des Aufzeichnungsträgers (19) untergebracht ist, mit einem rotierend antreibbaren Vorlauf-Wickeldorn (6) und einem rotierend antreibbaren Rücklauf-Wickeldorn (7), von denen jeder mit einem der beiden Wickelkerne (20, 21) zum Antreiben des Aufzeichnungsträgers (19) bei in das Gerät (1) eingesetzter Kassette (5) in Antriebsverbindung steht und mit einem von zwei je zu einem der beiden Wickeldorne (6, 7) koaxial angeordneten Wickeldornrädern (36, 37) drehfest verbunden ist, die beide an eine den Wickeldornrädern (36, 37) zugewandte Kassettenhauptseite (14) angrenzend im wesentlichen auf demselben axialen Niveau (38) angeordnet sind, und mit einer zum Antreiben der beiden Wickeldornräder (36, 37) vorgesehenen Antriebseinrichtung (39), die auf einem quer zu den Achsen (34, 35) der Wickeldorne (6, 7) verstellbaren Lagerbock (40) eine zu den Achsen (34, 35) der Wickeldorne (6, 7) parallele, drehbar gelagerte Antriebswelle (41) aufweist, auf der ein von einem Motor (43) her rotierend antreibbares Treibrad (44) angebracht ist und die einen ersten Wellenabschnitt (48) und einen zweiten Wellenabschnitt (49) aufweist, von denen der erste Wellenabschnitt (48) im wesentlichen auf dem Niveau (38) der Wickeldornräder (36, 37) und der zweite Wellenabschnitt (49) auf einem zwischen dem Niveau (38) der Wickeldornräder (36, 37) und dem Niveau (50) der von den Wickeldornrädern (36, 37) abgewandten Kassettenhauptseite (13) liegenden Niveau (51) liegt und von denen her durch Verstellen des Lagerbockes (40) wahlweise eines von den beiden Wickeldornrädern (36, 37) antreibbar ist, wobei zwischen dem zweiten Wellenabschnitt (49) und dem von diesem her antreibbaren Wickeldornrad (37) eine den Niveauunterschied zwischen ihren Niveaus (51,38) ausgleichende Antriebsverbindung (52) vorgesehen ist, dadurch gekennzeichnet, dass das auf der Antriebswelle (41) angebrachte Treibrad (44) neben dem für die Kassette (5) vorgesehenen Raum auf einem zwischen dem Niveau (38) der Wickeldornräder (36, 37) und dem Niveau (50) der von den Wickeldornrädern (36, 37) abgewandten Kassettenhauptseite (13) liegenden Niveau (53) angeordnet ist.

2. Gerät nach Anspruch 1, dadurch gekennzeichnet, dass das Niveau (53) des auf der Antriebswelle (41) angebrachten Treibrades (44) in axialer Richtung der Antriebswelle (41) einen grösseren Abstand von dem Niveau (38) der Wickeldornräder (36, 37) aufweist als das Niveau (51) des zweiten Wellenabschnittes (49) der Antriebswelle (41).

3. Gerät nach Anspruch 1 oder 2, dadurch gekennzeichnet, dass das Treibrad (44) im Bereich einer der beiden kurzen Kassettenschmalseiten (17, 18) neben der Kassette (5) liegt.

4. Gerät nach Anspruch 3, dadurch gekennzeichnet, dass das Treibrad (44) im Bereich der näher bei dem Vorlauf-Wickeldorn (6) befindlichen kurzen Kassettenschmalseite (18) neben der Kassette liegt.

5. Gerät nach Anspruch 4, bei dem das mit dem Vorlauf-Wickeldorn (6) drehfest verbundene Wickeldornrad (36) als Reibrad ausgebildet und von dem ersten Wellenabschnitt (48) der Antriebswelle (41) her antreibbar ist, dadurch gekennzeichnet, dass das mit dem Vorlauf-Wickeldorn (6) drehfest verbundene Reibrad (36) über ein weiteres Reibrad (54) antreibbar ist, mit dem durch Verstellen des Lagerbockes (40) der erste Wellenabschnitt (48) der Antriebswelle (41) in Antriebsverbindung bringbar ist.

6. Gerät nach Anspruch 5, dadurch gekennzeichnet, dass im Bereich des Lagerbockes (40) eine zum Verstellen desselben vorgesehene Verstellfeder (58) angeordnet ist, mit der der Lagerbock (40) zum Verstellen desselben in Richtung zu dem weiteren Reibrad (54) hin belastbar ist und mit der über den Lagerbock (40) der erste Wellenabschnitt (48) der Antriebswelle (41) mit dem weiteren Reibrad (54) in Antriebsverbindung ist.

7. Gerät nach einem der Ansprüche 4 bis 6, bei dem das mit dem Rücklauf-Wickeldorn (7) drehfest verbundene Wickeldornrad (37) als Zahnrad ausgebildet und auf dem zweiten Wellenabschnitt (49) der Antriebswelle (41) ein Stirnzahnrad (64) angebracht ist, das durch Verstellen des Lagerbockes 40 mit einem Zahnradgetriebe (65) in Eingriff bringbar ist, über welches das mit dem Rücklauf-Wickeldorn (7) drehfest verbundene Zahnrad (37) antreibbar ist, wobei in dem Zahnradgetriebe (65) die den Niveauunterschied zwischen dem Niveau (51) des zweiten Wellenabschnittes (49) und dem Niveau (38) der Wickeldornräder (36, 37) ausgleichende Antriebsverbindung (52) vorgesehen ist, dadurch gekennzeichnet, dass mit dem auf dem zweiten Wellenabschnitt (49) angebrachten Stirnzahnrad (64) über einen ersten Getriebeabschnitt (52) des Zahnradgetriebes (65) mit dem durch Verstellen des Lagerbockes (40) das Stirnzahnrad (64) in Eingriff bringbar ist und der die Antriebsverbindung zum Ausgleichen des Niveauunterschiedes zwischen dem Niveau (51) des Stirnzahnrades (64) und dem Niveau (38) der Wickeldornräder (36, 37) bildet, eine im wesentlichen auf dem Niveau (38) der Wickeldornräder (36, 37) verlaufende, einen flexiblen Bereich (66) aufweisende Wellenverbindung (67) antreibbar ist, die über einen im wesentlichen auf dem Niveau (38) der Wickeldornräder (36, 37) liegenden zweiten Getriebeabschnitt (68) des Zahnradgetriebes (65) das mit dem Rücklauf-Wickeldorn (7) drehfest verbundene Zahnrad (37) antreibt.

8. Gerät nach Anspruch 7, dadurch gekennzeichnet, dass der flexible Bereich (66) der Wellenverbindung (67) durch eine Schraubenfeder gebildet ist, die mit ihrem einen Ende auf eine von dem ersten Getriebeabschnitt (52) angetriebene erste Welle (69) und mit ihrem anderen Ende auf eine den zweiten Getriebeabschnitt (68) antreibende zweite Welle (70) aufgesetzt ist.

9. Gerät nach Anspruch 7 oder 8, dadurch gekennzeichnet, dass der erste Getriebeabschnitt (52) ein weiteres Stirnzahnrad (78), mit dem durch Verstellen des Lagerbockes (40) das auf dem zweiten Wellenabschnitt (49) angebrachte Stirnzahnrad (64) in Eingriff bringbar ist, ein mit dem weiteren Stirnzahnrad (78) koaxial verbundenes Kronenzahnrad (79), dessen Zähne in Richtung zu dem Niveau (38) der Wickeldornräder (36, 37) weisen, und ein mit dem Kronenzahnrad (79) in Eingriff stehendes Stirnzahnritzel (80) gebildet ist, das mit der ersten Welle (69) der Wellenverbindung (67) verbunden ist.

10. Gerät nach einem der Ansprüche 7 bis 9, dadurch gekennzeichnet, dass das mit dem Rücklauf-Wickeldorn (7) drehfest verbundene Zahnrad (37) als Schneckenrad ausgebildet ist und dass der zweite Getriebeabschnitt (68) durch eine mit der zweite Welle (70) der Wellenverbindung (67) verbundene Schnecke gebildet ist, die mit der zweiten Welle (70) auf einem quer zu den Achsen (34, 35) der Wickeldorne (6, 7) verstellbaren Träger (73) drehbar gelagert ist und die durch Verstellen des Trägers (73) mit dem Schneckenrad (37) in Eingriff bringbar ist.

11. Gerät nach Anspruch 10, dadurch gekennzeichnet, dass im Bereich des Trägers (73) eine zum Verstellen desselben vorgesehene weitere Verstellfeder (81) angeordnet ist, die den Träger (73) zum Verstellen desselben in Richtung zu einem stationären Anschlag (82) für denselben hin belastet und mit der über den Träger (73) die Schnecke (68) von dem mit dem Rücklauf-Wickeldorn (7) drehfest verbundenen Schneckenrad (37) ausser Eingriff bringbar ist.

12. Gerät nach Anspruch 10 oder 11, dadurch gekennzeichnet, dass zur Steuerung der Verstellung des Trägers (73) für die zweite Welle (70) )samt der Schnecke (68) und der Verstellung des Lagerbockes (40) für die Antriebswelle (41) samt dem Treibrad (44) ein einziger von Hand aus zumindest zwischen einer Vorlauf-Betriebsstellung und einer Rücklauf-Betriebsstellung verschiebbarer Steuerschieber (94) vorgesehen ist.

13. Gerät nach den Ansprüchen 11 und 12, dadurch gekennzeichnet, dass die weitere Verstellfeder (81) als Schenkelfeder ausgebildet ist, die mit ihrem einen Schenkel (85) an dem Träger (73) und mit ihrem anderen Schenkel (87) an einem quer zur Verstellrichtung des Steuerschiebers (94) verstellbar geführten Rastteil (88) abgestützt ist, der zumindest in einer der Betriebsstellungen des Steuerschiebers (94) mit der weiteren Verstellfeder (81) in eine an dem Steuerschieber (94) vorgesehene, dieser Betriebsstellung zugeordnete Rastvertiefung (95, 96) hineingedrückt ist.

14. Gerät nach den Ansprüchen 6 und 11 und 12 oder 13, dadurch gekennzeichnet, dass der Steuerschieber (94) in seiner Rücklauf-Betriebsstellung über einen ersten Mitnehmer (101) desselben die Verstellfeder (58), mit der der Lagerbock (40) belastbar ist, zum Aufheben der Belastung des Lagerbockes (40) und über einen zweiten Mitnehmer (102) desselben die weitere Verstellfeder (81), die den Träger (73) belastet, zum Ineingriffhalten der Schnecke (68) mit dem Schneckenrad (37) verstellt hält und in seiner Vorlauf-Betriebsstellung mit seinem ersten Mitnehmer (101) und seinem zweiten Mitnehmer (102) von den beiden Verstellfedern (58, 85) freigestellt ist.

15. Gerät nach einem der Ansprüche 7 bis 14, bei dem das auf der Antriebswelle (41) angebrachte Treibrad (44) als Pesenrad ausgebildet ist und auf der Motorwelle (45) des Motors (43) ein weiteres Pesenrad (46) angebracht ist, das über eine Pese (47) das Pesenrad (44) antreibt, dadurch gekennzeichnet, dass die Pese (47) über das Pesenrad (44) auf den verstellbaren Lagerbock (40) eine Kraft ausübt, die den Lagerbock (40) zum Ineingriffbringen des auf dem zweiten Wellenabschnitt (49) der Antriebswelle (41) angebrachten Stirnzahnrades (64) mit dem Zahnradgetriebe (65) zum Antreiben des mit dem Rücklauf-Wickeldorn (7) drehfest verbundenen Zahnrades (37) belastet.

16. Gerät nach Anspruch 15, dadurch gekennzeichnet, dass der Lagerbock (40) zu seiner Verstellung auf einem verschwenkbaren Verstellhebel (108) angebracht ist und dass bei der Verstellung des Lagerbockes (40) zum Ineingriffbringen des auf dem zweiten Wellenabschnitt (49) der Antriebswelle (41) angebrachten Stirnzahnrades (64) mit dem Zahnradgetriebe (65) zum Antreiben des mit dem Rücklauf-Wickeldorn (7) drehfest verbundenen Zahnrades (37) das Pesenrad (44) von dem weiteren Pesenrad (46) weg verstellt wird, wobei die Pese (47) zwischen dem weiteren Pesenrad (46) und dem Pesenrad (44) zusätzlich gespannt wird.

## Claims

1. A recording and/or reproducing apparatus (1) for a record carrier (19) in the form of a tape accommodated in a cassette(5) which can he loaded into the apparatus (1) and which has two juxtaposed rotatably drivable reel hubs (20, 21) for taking up the record carrier (19), the apparatus comprising a rotatably drivable forward winding mandril (6) and a rotatably drivable reverse winding mandril (7), which winding mandrils each engage one of the two reel hubs (20, 21) to drive the record carrier (19) when a cassette (5) has been loaded into the apparatus (1), and are each rotationally locked to one of two winding mandril wheels (36, 37) which are each coaxial with one of the two winding mandrils (6, 7) and which are both disposed at substantially the same axial level (38) adjacent a cassette main side (14) which faces the winding mandril wheels (36, 37), and comprising a drive arrangement (39) which is constructed to drive the two winding mandril wheels (36, 37) and which comprises a drive shaft (41) which extends parallel to the axes (34, 35) of the winding mandrils (6, 7) and which is rotatably journalled on a bearing support (40) which is movable transversely of the axes (34, 35) of the winding mandrils (6, 7), which drive shaft carries a drive wheel (44), which is rotatably drivable by a motor (43), and comprises a first shaft section (48) and a second shaft section (49), the first shaft section (48) being disposed at substantially the same level (38) as the winding mandril wheels (36, 37) and the second shaft section (49) being disposed at a level (51) between the level (38) of the winding mandril wheels (36, 37) and the level (50) of the cassette main-side (13) which is remote from the winding mandril wheels (36, 37), and by means of which shaft sections one of the two winding mandril wheels (36, 37) is drivable selectively by moving the bearing support (40), a drive transmission (52) being arranged between the second shaft section (49) and the winding mandril wheel (37) which can be driven by means of said second shaft section, to bridge the difference between their levels (51, 38), characterised in that the drive wheel (44) on the drive shaft (41) is disposed adjacent the space provided for the cassette (5) and at a level (53) between the level (38) of the winding mandril wheels (36, 37) and the level (50) of the cassette main side (13) which is remote from the winding mandril wheels (36, 37).

2. An apparatus as claimed in Claim 1, characterised in that in the axial direction of the drive shaft (41) the level (53) of the drive wheel (44) on the drive shaft (41) is situated at a larger distance from the level (38) of the winding mandril wheels (36, 37) than the level (51) of the second shaft section (49) of the drive shaft (41).

3. An apparatus as claimed in Claim 1 or 2, characterised in that the drive wheel (44) is situated adjacent the cassette (5) in the proximity of one of the two short and narrow cassette sides (17, 18).

4. An apparatus as claimed in Claim 3, characterised in that the drive wheel (44) is situated adjacent the cassette in the proximity of the short and narrow cassette side (18) nearer the forward winding mandril (6).

5. An apparatus as claimed in Claim 4, in which the winding mandril wheel (36) to which the forward winding mandril (6) is rotationally locked is constructed as a friction wheel and is drivable by the first shaft section (48) of the drive shaft (41), characterised in that the friction wheel (36) which is rotationally locked to the forward-winding-mandril (6) is drivable *via* a further friction wheel (54) with which the first shaft section (48) of the drive shaft (41) is engageable by moving the bearing support (40).

6. An apparatus as claimed in Claim 5, characterised in that a actuating spring (58) for moving the bearing support (40) is arranged in the proximity of said support to load the bearing support (40) for movement towards the further friction wheel (54) and by means of which spring, *via* the bearing support (40), the first shaft section (48) of the drive shaft (41) is engageable with the further friction wheel (54) to drive said further friction wheel.

7. An apparatus as claimed in any one of the Claims 4 to 6, in which the winding mandril wheel (37) which is rotationally locked to the reverse winding mandril (7) is constructed as a toothed wheel and in which the second shaft section (49) of the drive shaft (41) carries a spur wheel which by moving the bearing support (40) is engageable with a toothed-wheel drive mechanism (65), *via* which the toothed wheel (37) which is rotationally locked to the reverse winding mandril (7) is drivable, the toothed-wheel drive mechanism (65) comprising a drive transmission (52) which bridges the difference between the level (51) of the second shaft section (49) and the level (38) of the winding mandril wheels (36, 37), characterised in that by means of the spur wheel (64) on the second shaft section (49) a shaft transmission (67) is drivable *via* a first drive section (52) of the toothed-wheel drive mechanism (65), with which section the spur wheel (64) is engageable by moving the bearing support (40) and which constitutes the drive transmission bridging the difference between the level (51) of the spur wheel (64) and the level (38) of the winding mandril wheels (36, 37), which shaft transmission (67) comprises a flexible portion (66), is disposed at substantially the same level (38) as the winding mandril wheels (36, 37) and, *via* a a second drive section (68) of the toothed-wheel drive mechanism (65), which drive section is disposed at substantially the same level (38) as the winding mandril wheels (36, 37), drives the toothed wheel (37) which is rotationally locked to the reverse winding mandril (7).

8. An apparatus as claimed in Claim 7, characterised in that the flexible portion (66) of the shaft transmission (67) is constituted by a helical spring having one of its ends attached to a first shaft (69) driven by the first drive section and having its other end attached to a second shaft (70) driving the second drive section (68).

9. An apparatus as claimed in Claim 7 or 8, characterised in that the first drive section (52) comprises a further spur wheel (78), which is engageable with the spur wheel (64) on the second shaft section (49) by moving the bearing support (40), a crown wheel (79), which is coaxially connected to the further spur wheel (78) and whose teeth point towards the level (38) of the winding mandril wheels (36, 37), and a pinion (80), which meshes with the crown wheel (79) and is connected to the first shaft (69) of the shaft transmission (67).

10. An apparatus as claimed in any one of the Claims 7 to 9, characterised in that the toothed wheel (37) which is rotationally locked to the reverse winding mandril (7) is constructed as a worm wheel, and in that the second drive section (68) is constituted by a worm connected to the second shaft (70) of the shaft transmission (67), which worm together with the second shaft (70) is rotatably supported by a further support (73) which is movable transversely of the axes (34, 35) of the winding mandrils (6, 7), and which worm is engageable with the worm wheel (37) by moving the further support (73).

11. An apparatus as claimed in Claim 10, characterised in that a further actuating spring (81) for moving the further support (73) is arranged in the proximity of said further support to load the further support (73) for movement towards a stationary stop (82) for said further support and by means of which spring, *via* the further support (73), the worm (68) is disengageable from the worm wheel (37) which is rotationally locked to the reverse-winding mandril (7).

12. An apparatus as claimed in Claim 10 or 11, characterised in that a single control slide (94) has been provided for controlling the movement of the support (73) for the second shaft (70) together with the worm (68) and the movement of the bearing support (40) for the drive shaft (41) together with the drive wheel (44), which control slide is movable by hand at least between a forward operating position and a reverse operating position.

13. An apparatus as claimed in Claims 11 and 12, characterised in that the further actuating spring (81) is constructed as a leg spring having one leg (85) acting against the further support (73) and having another leg (87) acting against a latching member (88) which is guided to be movable transversely of the direction of movement of the control slide (94) and which under the influence of the further actuating spring (81), at least in one of the operating positions of the control slide (94), engages in a latching recess (95, 96) formed in the control slide (94) and corresponding to said operating position.

14. An apparatus as claimed in Claims 6 and 11 and 12 or 13, characterised in that in its reverse operating position the control slide (94), *via* a first actuating portion (101) of said slide, keeps the actuating spring (58) for loading the bearing support (40) in a position in which the bearing support (40) is not loaded, and *via* a second actuating portion (102) of said slide, keeps the further actuating spring (81) for loading the further support (73) in a position in which the worm (68) is in mesh with the worm wheel (37), and in its forward operating position its first actuating portion (101) and its second actuating portion (102) are clear of the two actuating springs (58, 85).

15. An apparatus as claimed in any one of the Claims 7 to 14, in which the drive wheel (44) on the drive shaft (41) is constructed as a pulley and in which a further pulley (46) is mounted on the motor shaft (45) of the motor (43) to drive the pulley (44) *via* a belt (47), characterised in that the belt (47) exerts a force on the movable bearing support (40) *via* the pulley (44) to cause the bearing support (40) to bring the spur wheel (64) on the second shaft section (49) of the drive shaft (41) in mesh with the toothed-wheel drive mechanism (65) for driving the toothed wheel (37) which is rotationally locked to the reverse-winding mandril (7).

16. An apparatus as claimed in Claim 15, characterised in that for moving the bearing support (40) said support is arranged on a pivotable actuating lever (108), and in that during the movement of the bearing support (40) to bring the spur wheel (64) on the second shaft section (49) of the drive shaft (41) in mesh with the toothed-wheel drive mechanism (65) for driving the toothed wheel (37) which is rotationally locked to the reverse-winding mandril (7) the pulley (44) is moved away from the further pulley (46), causing the belt (47) between the further pulley (46) and the pulley (44) to be tensioned additionally.

## Revendications

1. Appareil d'enregistrement et/ou de reproduction (1) pour un support d'enregistrement en forme de bande (19) qui est logé dans une cassette (5) à insérer dans l'appareil (1) munie de deux axes d'enroulement juxtaposés (20, 21) pouvant être portés à rotation pour l'enroulement du support d'enregistrement (19), d'un noyau d'enroulement en avant pouvant être porté à rotation (6) et d'un noyau d'enroulement en arrière (7) pouvant être porté à rotation, dont chacun est en raccordement d'entraînement avec l'un des deux axes d'enroulement (20, 21) pour l'entraînement du support d'enregistrement (19) dans le cas où une cassette (5) est introduite dans l'appareil (1) et est reliée d'une façon résistant à la rotation à l'une de deux roues de noyau d'enroulement (36, 37) disposées de façon coaxiale par rapport à l'un des deux noyaux d'enroulement (6, 7), les deux étant disposées essentiellement au même niveau axial (38) de façon à avoisiner une face principale (14) de la cassette opposée aux roues de noyau d'enroulement (36, 37) et d'un dispositif d'entraînement (39) prévu pour l'entraînement des deux roues de noyau d'enroulement (36, 37) et présentant, sur un support de palier (40) déplaçable disposé de façon perpendiculaire aux axes (34, 35) des noyaux d'enroulement (6, 7), un arbre d'entraînement (41) disposé de façon à pouvoir tourner, parallèle aux axes (34, 35) des noyaux d'enroulement (6, 7) sur lequel est disposée une roue d'entraînement (44) pouvant être portée à rotation par un moteur (43) et présentant un premier tronçon d'arbre (48) et un deuxième tronçon d'arbre (49), tronçons d'arbre dont le premier (48) se situe essentiellement au niveau (38) des roues de noyau d'enroulement (36, 37) et dont le deuxième (49) se situe à un niveau (51) situé entre le niveau (38) des roues de noyau d'enroulement (36, 37) et le niveau (51) de la face principale de la cassette (13) située à l'opposé des roues de noyau d'enroulement (36, 37) et à partir desquels l'une des deux roues de noyau d'enroulement (36, 37) peut être entraînée à volonté par déplacement du support de palier (40), un raccordement d'entraînement compensateur (52) étant prévu entre le deuxième tronçon d'arbre (49) et la roue de noyau d'enroulement (37) pouvant être entraînée par ce dernier pour compenser la différence en niveau entre leurs niveaux (51, 38), caractérisé en ce que la roue d'entraînement (44) disposée sur l'arbre d'entraînement (41) à côté de l'enceinte prévue pour la cassette (5) est disposée sur un niveau (53) situé entre le niveau (38) des roues de noyau d'enroulement (36, 37) et le niveau (50) de la face principale (13) de la cassette située à l'opposé des roues de noyau d'enroulement (36, 37).

2. Appareil selon la revendication 1, caractérisé en ce que dans la direction axiale de l'arbre d'entraînement (41), le niveau (53) de la roue d'entraînement (44) disposée sur l'arbre d'entraînement (41) présente une plus grande distance par rapport au niveau (38) des roues de noyau d'enroulement (36 37) que le niveau (51) du deuxième tronçon d'arbre (49) de l'arbre d'entraînement (41).

3. Appareil selon la revendication 1 ou 2, caractérisé en ce que dans la une de l'une des deux courtes faces étroites (17, 18) de la cassette,la roue d'entraînement (44) se situe à côté de la cassette (5).

4. Appareil selon la revendication 3, caractérisé en ce que dans la une de la courte face étroite (18) de la cassette se trouvant plus près du noyau d'enroulement en avant (6), la roue d'entraînement (44) se trouve à côté de la cassette.

5. Appareil selon la revendication 4, dans lequel la roue de noyau d'entraînement (36) reliée de façon à résister à la rotation au noyau d'enroulement en avant (6) est conçue comme roue de friction et peut être entraînée à partir du premier tronçon d'arbre (48) de l'arbre d'entraînement (41), caractérisé en ce que la roue de friction (36) reliée de façon à résister à la rotation au noyau d'enroulement en avant (6) peut être entraînée par l'intermédiaire d'une autre roue de friction (54) avec laquelle le premier tronçon d'arbre (48) de l'arbre d'entraînement (41) peut être porté en raccordement d'entraînement par l'intermédiaire d'une autre roue de friction (54).

6. Appareil selon la revendication 5, caractérisé en ce que dans la zone du support de palier (40) est disposé, pour son déplacement, un ressort de déplacement (58) qui permet de charger le support de palier (40) pour son déplacement dans la direction de l'autre roue de friction (54) et avec lequel est en raccordement d'entraînement le premier tronçon d'arbre (48) de l'arbre d'entraînement (41) par l'intermédiaire du support de palier (40).

7. Appareil selon l'une des revendication 4 à 6, dans lequel la roue de noyau d'enroulement (37) reliée de façon à résister à la rotation au noyau d'enroulement en arrière (7) est conçue comme roue dentée et sur le deuxième tronçon d'arbre (49) de l'arbre d'entraînement (41) est disposée une roue dentée droite (64) qui peut être engrenée, par déplacement du support de palier (40), à une transmission par engrenages (65), par l'intermédiaire de laquelle peut être entraînée la roue dentée (37) reliée de façon à résister à la rotation au noyau d'enroulement en arrière (7), alors que dans la transmission par engrenages (65) est prévu le raccordement d'entraînement (52) pour compenser la différence en niveau entre le niveau (51) du deuxième tronçon d'arbre (49) et le niveau (38) des roues de noyau d'enroulement (36, 37), caractérisé en ce que la roue dentée droite (64) disposée sur le deuxième tronçon d'arbre (49) permet d'entraîner, par l'intermédiaire d'une première partie de transmission (52) de la transmission par engrenages (65) avec laquelle Peut être engrenée la roue dentée droite (64) par déplacement du support de palier (40) et qui constitue le raccordement d'entraînement pour compenser la différence en niveau entre le niveau (51) de la roue dentée droite (64) et le niveau (38) des roues de noyau d'enroulement (36, 37), un raccordement d'arbre (67) s'étendant essentiellement au niveau (38) des roues de noyau d'enroulement (36, 37) et présentant une zone flexible (66), raccordement d'arbre qui entraîne, par l'intermédiaire d'une deuxième partie de transmission (58) de la transmission par engrenages (65) située essentiellement au niveau (38) des roues de noyau d'enroulement (36, 37), la roue dentée (37) reliée de façon à résister à la rotation au noyau d'enroulement en arrière (7).

8. Appareil selon la revendication 7, caractérisé en ce que la zone flexible (66) du raccordement d'arbre (67) est constituée par un ressort à boudin, dont une extrémité est disposée sur un premier arbre (69) entraîné par la première partie de transmission (52) et dont l'autre extrémité est disposée sur un deuxième arbre (70) entraînant la deuxième partie de transmission (68).

9. Appareil selon la revendication 7 ou 8, caractérisé en ce que la première partie de transmission (52) est une autre roue dentée droite (78) avec laquelle peut être engrenée par déplacement du support de palier (40), la roue dentée droite (64) disposée sur le deuxième tronçon d'arbre (49), une couronne dentée (79) qui est reliée de façon coaxiale à l'autre roue dentée droite (78) et dont les dents s'étendent dans la direction du niveau (38) des roues de noyau d'enroulement (36, 37), et un pignon à denture droite (80) en prise avec la couronne dentée (79) et relié au premier arbre (69) du raccordement d'arbre (70).

10. Dispositif selon l'une des revendications 7 à 9, caractérisé en ce que la roue dentée (37) reliée de façon à résister à la rotation au noyau d'enroulement en arrière (7) est conçue comme roue hélicoïdale et la deuxième partie de transmission (68) est formée par une vis sans fin reliée au deuxième arbre (70) du raccordement d'arbre (67) et reposant de façon à pouvoir tourner avec le deuxième arbre (70) sur un support (73) pouvant être déplacé perpendiculairement aux axes (34, 35) des noyaux d'enroulement (6, 7) et pouvant être engrenée avec la roue hélicoïdale (37) par déplacement du support (73).

11. Appareil selon la revendication 10, caractérisé dans la zone du support (73) est disposée, pour son déplacement, un autre ressort de déplacement (81) qui charge le support (73) pour son déplacement dans la direction d'un arrêt stationnaire (82) pour le support (73) et qui permet, par l'intermédiaire du support (73), de désengrener la vis sans fin (68) de la roue hélicoïdale (37) reliée de façon à résister à la rotation au noyau d'enroulement en arrière (7).

12. Appareil selon la revendication 10 ou 11, caractérisé en ce que pour commander le déplacement du support (73) pour le deuxième arbre (70) ensemble avec la vis sans fin (68) et le déplacement du support de palier (40) pour l'arbre d'entraînement (41) ensemble avec la roue d'entraînement (44) est prévu un seul curseur de commande 94 pouvant être coulissé manuellement entre au moins une position de marche en avant et une position de marche en arrière.

13. Appareil selon les revendications 11 et 12, caractérisé en ce que l'autre ressort de déplacement (81) est conçu comme ressort à branches, dont une branche (85) repose sur le support (73) et dont l'autre branche (87) repose contre une partie de repos (88) pouvant être déplacée perpendiculairement à la direction de déplacement du curseur de commande 84 et poussée au moins dans l'une des positions de fonctionnement du curseur de commande (94) par l'autre ressort de déplacement (81) dans un évidement de repos (95, 96) prévu au curseur de commande (94) et correspondant à cette position de fonctionnement.

14. Appareil selon les revendications 6 et 11 et 12 ou 13, caractérisé en ce que dans sa position de mode d'enroulement en arrière, le curseur de commande (94) maintient, par l'intermédiaire d'un premier entraineur (101), le ressort de déplacement (58) qui charge le support de palier (40), déplacé pour éliminer la charge du support de palier (40) et, par l'intermédiaire d'un deuxième entraîneur (102), l'autre ressort de déplacement (81) qui charge le support (73), pour maintenir l'engrenage de la vis sans fin (68) et de la roue hélicoïdale (37) et qu'il est dégagé des deux ressorts de déplacement (58, 85) dans sa position d'enroulement en avant avec son premier entraîneur (101) et son deuxième entraîneur (102).

15. Appareil selon l'une des revendications 7 à 14, dans lequel la roue d'entraînement (44) disposée sur l'arbre d'entraînement (41) est connue comme poulie et sur l'arbre moteur (45) du moteur (43) est disposée une autre poulie (46) qui entraîné la poulie (44) par l'intermédiaire d'une courroie sans fin, caractérisé en ce que la courroie sans fin (47) exerce, à l'aide de la poulie (44), sur le support de palier déplaçable (40) une force qui charge le support de palier (40) pour l'engrènement de la roue dentée droite (64) disposée sur le deuxième tronçon d'arbre (49) de l'arbre d'entraînement (41) avec la transmission par engrenages (65) pour entraîner la roue dentée (37) reliée de façon à résister à la rotation au noyau d'enroulement en arrière (7).

16. Appareil selon la revendication 15, caractérisé en ce que le support de palier (40) est disposé pour son déplacement, sur un levier de déplacement pivotable (108) et que, lors du déplacement du support de palier (40) pour l'engrenage de la roue dentée droite (64) disposée sur le deuxième tronçon d'arbre (49) de l'arbre d'entraînement (41) avec la transmission par engrenages (65) pour entraîner la roue dentée (37) reliée de façon à résister à la rotation au noyau d'enroulement en arrière (7), la poulie (44) est écartée de l'autre poulie (46) de façon que la courroie sans fin (47) entre l'autre poulie (46) et la poulie (44) soit tendue de façon additionnelle.
